# EUROPÄISCHE PATENTSCHRIFT

(11) **EP 4 230 018 B1**
(45) Veröffentlichungstag und Bekanntmachung des Hinweises auf die Patenterteilung: **26.08.2026**
(21) Anmeldenummer: 23152594.0
(22) Anmeldetag: 20.01.2023
(51) Int. Cl.: A01C 15/00, A01C 17/00

(54) **ZWEISCHEIBENSTREUER MIT EINER GRENZSTREUEINRICHTUNG**
DOUBLE-DISC SPREADER HAVING A BOUNDARY SPREADING DEVICE
ÉPANDEUR À DEUX DISQUES DOTÉ D'UN DISPOSITIF D'ÉPANDAGE DE BORD

(30) Priorität: 17.02.2022 DE 202022100919 U
(43) Veröffentlichungstag der Anmeldung: 23.08.2023
(73) Patentinhaber: RAUCH Landmaschinenfabrik GmbH, 77836 Rheinmünster (DE)
(72) Erfinder: DOLL, Franz, 76547 Sinzheim (DE); GUSHURST, Hans, 76547 Sinzheim (DE); VALENTIN, Jean-Baptiste, 67000 Strasbourg (FR); VELTEN, Michael, 76547 Sinzheim (DE); STÖCKLIN, Volker, 77975 Ringsheim (DE)
(74) Vertreter: Lichti - Patentanwälte Partnerschaft mbB

(56) Entgegenhaltungen:
- EP-A1- 3 685 653
- DE-U1- 9 306 605
- FR-A- 1 400 911

## Beschreibung

Die Erfindung betrifft einen Zweischeibenstreuer mit zwei um parallele Achsen gegensinnig drehangetriebenen Verteilerscheiben und mit einer Grenzstreueinrichtung, welche in ihrer Betriebsstellung zentral zwischen den Verteilerscheiben angeordnet ist und zwei im Wesentlichen vertikal angeordnete Hauptleitflächen aufweist, welche symmetrisch zur Längsachse des Zweischeibenstreuers jeweils von einem zwischen den Verteilerscheiben angeordneten Punkt schräg nach außen und - in Längsrichtung des Zweischeibenstreuers betrachtet - von den Verteilerscheiben fort divergieren.

Zweischeibenstreuer der vorgenannten Art sind insbesondere in Form von sogenannten Schleuder- oder Zentrifugalstreuern für landwirtschaftliche Zwecke zum Ausbringen von pulver- oder partikelförmigen Verteilgut, wie insbesondere Dünger oder auch Saatgut, in vielfältiger Ausgestaltung bekannt, so beispielsweise in gezogener oder von einem Dreipunkt einer Zugmaschine, wie eines Traktors, aufgenommener Bauart. Derartige Zweischeibenstreuer umfassen einen das Verteilgut aufnehmenden Behälter, an dessen Boden üblicherweise zwei Auslauföffnungen angeordnet sind, wobei der jeweiligen Auslauföffnung je ein Dosierorgan zugeordnet ist, um das auszubringende Verteilgut in der gewünschten Menge - oder genauer: mit dem gewünschten Massenstrom - dem Behälter zu entnehmen. Das jeweilige Dosierorgan weist üblicherweise einen Dosierschieber auf, welcher mittels eines geeigneten Stellorgans auf- und zusteuerbar, um je nach gewünschter Verteilungsbreite des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Alternativ kann das Dosierorgan zu demselben Zweck z.B. auch eine steuerbar drehangetriebenes Nocken- oder Zellenradwalze umfassen. Stromab eines jeweiligen Dosierorgans befindet sich eine jeweilige Verteilerscheibe, welche üblicherweise mit Wurfschaufeln bestückt ist und dazu dient, das pulver- oder partikelförmige Verteilgut über die gewünschte Arbeitsbreite zu verteilen. Die in der Regel um vertikale Drehachsen rotationsangetriebenen Verteilerscheiben rotieren dabei in der Regel gegensinnig, wobei die in Fahrtrichtung rechte Verteilerscheibe entgegen und die in Fahrtrichtung linke Verteilerscheibe im Uhrzeigersinn rotiert, wenn man die Verteilerscheiben von oben betrachtet.

Im Falle von Winterdienststreumaschinen dient der Behälter vornehmlich zur Aufnahme von in der Regel granulatförmigem Splitt, Sand und/oder Streusalz, wobei die Funktion einer solchen Winterdienststreumaschine weitestgehend der eines oben beschriebenen landwirtschaftlichen Zweischeibenstreuers entspricht.

Anlässlich des sogenannten Normalstreuens wird in der Landwirtschaft eine gleichmäßige Streudichte durch Überlappen der von den Verteilerscheiben abgeworfenen Streufächer beim Befahren benachbarter Fahrgassen erreicht. Das Verteilgut wird hierbei von den Verteilerscheiben zu beiden Seiten des Zweischeibenstreuers gleichmäßig, aber mit unterschiedlicher, von innen nach außen abnehmender Streudichte verteilt. Hierbei sind flachflankige, wie insbesondere im Wesentlichen trapez- oder dreieckförmige Streubilder, besonders geeignet zur Erzielung einer gleichmäßigen Streudichte, wobei beim Anschlussfahren in der benachbarten Fahrgasse die Streubilder derart überlappt werden, dass sich eine gleichmäßige Verteilung über die gesamte Arbeitsbreite ergibt. Derartige, beim Normalstreuen erwünschte Streubilder führen jedoch an der Feldgrenze, wo nur einseitig gestreut wird und folglich ein Überlappen nicht stattfindet, zu einer Unterversorgung, wenn nur bis zur Feldgrenze gestreut wird, oder aber zum Überstreuen der Grenze über den Feldrand hinaus und damit zu entsprechenden Düngemittelverlusten. In vielen Fällen muss ein solches Überstreuen ohnehin dringend vermieden werden, wenn beispielsweise die Saat oder Frucht auf dem Nachbarfeld keine oder eine andere Nährstoffversorgung benötigt oder aber entlang der Grenze ein Gewässer oder eine Straße verläuft. Ähnliches gilt für im Innern des Feldes befindliche Hindernisse, welche nicht bestreut werden sollen bzw. dürfen, wie Baumgruppen, Buschwerk, Gewässer, Gesteinsformationen oder dergleichen.

Um beim Grenzstreuen eine gleichmäßige Streudichte zu gewährleisten und ein Überstreuen der Grenze zu vermeiden, muss auf der Grenzseite des Zweischeibenstreuers für ein steilflankiges Streubild gesorgt werden, während zur Feldmitte hin das übliche flache Streubild beibehalten werden muss. Um diese Grenzstreuaufgabe zu lösen, können beispielsweise spezielle Grenzstreuscheiben eingewechselt oder aber die Wurfschaufeln auf der der Grenze zugewandten Verteilerscheibe ausgewechselt oder verstellt werden. Bei mehreren Arbeitsbreitenbereichen müssen für das Grenzstreuen in diesem Fall sogar mehrere Grenzstreuscheiben zur Verfügung stehen bzw. die Wurfschaufeln unterschiedlich eingestellt werden, was sich als aufwändig und in handhabungstechnischer Hinsicht als mühsam erweist.

Bei modernen Zweischeibenstreuern, deren Verteilerscheiben unabhängig voneinander drehzahlsteuerbar sind und/oder welche mit einer Einrichtung zur Verstellung des Aufgabepunktes des Verteilgutes auf die jeweilige Verteilerscheibe ausgestattet sind, ist es ferner bekannt, ein Grenz- oder Randstreuen dadurch zu gewährleisten, indem die Drehzahl des Antriebs der grenznahen Verteilerscheibe reduziert und/oder deren Aufgabepunkt verlagert wird, sei es im Wesentlichen in Umfangsrichtung der grenznahen Verteilerscheibe entgegen deren Drehrichtung oder sei es im Wesentlichen in Radialrichtung der grenznahen Verteilerscheibe nach außen. Dies erfordert indes einerseits einen mit den entsprechenden Einrichtungen ausgestatteten Zweischeibenstreuer, andererseits lässt sich hierdurch nur bedingt ein exakt an der Feldgrenze abrupt abfallenden Streubild erzeugen.

Für kleinere bzw. kostengünstigere Zweischeibenstreuer sind statt dessen mechanische Grenzstreueinrichtungen in Form sogenannter Grenzstreuschirme bekannt, welche fest an das Streugerät anbaubar oder aus einer Transport- und Ruhestellung, in welcher sie nicht mit den von den Verteilerscheiben abgeworfenen Verteilgutpartikeln in Kontakt treten können, in eine Betriebsposition gebracht werden können, in welcher sie die Streubreite der grenznahen Verteilerscheibe verringern, indem sie einen Teil der von letzterer abgeworfenen Verteilgutpartikel zurück in Richtung des Feldinneren reflektieren. Derartige Grenzstreueinrichtungen weisen beispielsweise eine Mehrzahl an vertikalen Leitflächen auf, deren vordringliche Aufgabe darin besteht, die die Verteilerscheibe zur Feldgrenze hin verlassenden Streugutpartikel abzulenken. Die Leitflächen können zu diesem Zweck je nach ihrer Position in Bezug auf die jeweilige Verteilerscheibe unterschiedlich geformt, beispielsweise gekrümmt oder unter unterschiedlichen Winkeln abgeknickt sein. Derartige Grenzstreueinrichtungen sind zur Montage an den einer jeweiligen Feldgrenze zugewandten Seite einer jeweiligen Verteilerscheibe, d.h. im Bereich der Ecken des Zweischeibenstreuers vorgesehen, so dass die Verteilungsbreite der der Feldgrenze zugewandten Verteilerscheibe einerseits verschmälert wird, andererseits deren Streubild steiler abfällt.

Darüber hinaus sind gattungsgemäße Grenzstreueinrichtungen bekannt, welche in ihrer Betriebsstellung zentral zwischen den Verteilerscheiben angeordnet sind und zwei im Wesentlichen vertikal angeordnete Hauptleitflächen aufweisen, welche symmetrisch zur Längsachse des Zweischeibenstreuers jeweils von einem zwischen den Verteilerscheiben angeordneten Punkt schräg nach außen und - in Längsrichtung des Zweischeibenstreuers betrachtet - von den Verteilerscheiben fort divergieren. Beim Grenz- oder Randstreuen mittels einer solchen Grenzstreueinrichtung wird das Dosierorgan der dem Feldrand zugewandten Verteilerscheibe gänzlich abgeschaltet und dient die Grenzstreueinrichtung zur Begrenzung des Streubildes der dem Feldrand abgewandten Verteilerscheibe, damit letztere das Verteilgut nicht in Richtung der anderen (stillgesetzten) Verteilerscheibe über den Feldrand hinauswirft. Anlässlich eines solchen Grenz- oder Randstreuens fährt der Zweischeibenstreuer relativ nahe an der Feldgrenze entlang, wie beispielsweise entlang einer dem Feldrand nahen Fahrgasse oder entlang dem Vorgewende, wobei die Grenzstreueinrichtung eine möglichst gleichmäßige Verteilung des Verteilgutes bis an den Feldrand, aber nicht über diesen hinaus gewährleisten muss (das Streubild ist steilflankig und fällt bis zum Feldrand steil ab), wohingegen in Richtung des Feldinneren ein dem Normalstreuen entsprechendes, von der Grenzstreueinrichtung weitgehend unbeeinflusstes Streubild erzielt werden muss (das Streubild fällt zum flachflankig in Richtung des Feldinneren ab). Eine solche Grenzstreueinrichtung für einen Zweischeibenstreuer ist beispielsweise aus der DE 93 06 605 U1 bekannt.

Die FR 1 400 911 A beschreibt einen Zweischeibenstreuer mit einer ähnlichen Grenzstreueinrichtung, welche in ihrer Betriebsstellung zentral zwischen den Verteilerscheiben angeordnet ist und zwei vertikal angeordnete Hauptleitflächen aufweist, welche symmetrisch zur Längsachse des Zweischeibenstreuers angeordnet sind und sich jeweils von einem zwischen den Verteilerscheiben angeordneten Punkt parallel zu einem Umfangsabschnitt der jeweiligen Verteilerscheibe nach außen und hinten erstrecken. Dabei erstreckt sich eine jeweilige Hauptleitfläche der Grenzstreueinrichtung parallel zum Verteilerscheibenumfang bis zu je einem Punkt nach außen und hinten, dessen gedachte horizontale Verbindungslinie mit der Drehachse der jeweiligen Verteilerscheibe mit einer gedachten, die jeweilige Drehachse der jeweiligen Verteilerscheibe schneidenden, horizontalen und sich in Längsrichtung des Zweischeibenstreuers erstreckenden Linie einen Winkel von etwa 10° einschließt.

Indes besteht ein Nachteil solcher gattungsgemäßer Grenzstreueinrichtungen insbesondere darin, dass beim Grenz- oder Randstreuen mit der einzig aktiven, nämlich der dem Feldrand abgewandten, Verteilerscheibe ein nicht hinreichend steilflankiges Streubild erzielt werden kann, so dass sich entweder im Randbereich des Feldes eine Unterversorgung an Verteilgut ergibt oder Anteile an Verteilgut über den Feldrand hinausgeworfen werden, was es aus den oben genannten Gründen zu vermeiden gilt.

Der Erfindung liegt daher die Aufgabe zugrunde, eine Grenzstreueinrichtung eines Zweischeibenstreuers der eingangs genannten Art auf einfache und kostengünstige Weise dahingehend weiterzubilden, dass unter zumindest weitestgehender Vermeidung der vorgenannten Nachteile beim Grenz- oder Randstreuen einerseits eine gleichmäßigere Querverteilung bis unmittelbar zu dem Feldrand erzielt werden kann, zugleich aber sichergestellt wird, dass praktisch kein Verteilgut über den Feldrand hinaus geworfen wird.

Erfindungsgemäß wird diese Aufgabe bei einem mit einer solchen Grenzstreueinrichtung ausgestatteten Zweischeibenstreuer der eingangs genannten Art dadurch gelöst, dass
- sich eine jeweilige Hauptleitfläche der Grenzstreueinrichtung bis zu je einem Punkt schräg nach außen und - in Längsrichtung des Zweischeibenstreuers betrachtet - von einer jeweiligen Verteilerscheibe fort erstreckt, dessen gedachte horizontale Verbindungslinie mit der Drehachse der jeweiligen Verteilerscheibe mit einer gedachten, die jeweilige Drehachse der jeweiligen Verteilerscheibe schneidenden, horizontalen und sich in Längsrichtung des Zweischeibenstreuers erstreckenden Linie einen Winkel von höchstens 30° einschließt, und
- eine jeweilige Hauptleitfläche der Grenzstreueinrichtung wenigstens eine mit Abstand von dem dem Zweischeibenstreuer fernen Ende der jeweiligen Hauptleitfläche angeordnete Durchgangsöffnung aufweist, welche in Bezug auf die Längsachse des Zweischeibenstreuers symmetrisch angeordnet sind.

Die erfindungsgemäße Ausgestaltung sieht folglich einerseits vor, dass sich die Hauptleitflächen der Grenzstreueinrichtung gegenüber dem Stand der Technik deutlich weiter um eine jeweilige Verteilerscheibe herum schräg nach außen erstrecken, und zwar bis zu je einem Punkt, für welchen die folgende Bedingung gilt:
- eine gedachte horizontale Verbindungslinie zwischen dem Punkt, bis zu welchem sich eine jeweilige Hauptleitfläche der Grenzstreueinrichtung von dem Zweischeibenstreuer fort erstreckt, und der Drehachse der jeweiligen Verteilerscheibe, und
- eine gedachte, die jeweilige Drehachse der jeweiligen Verteilerscheibe schneidende, horizontale und sich in Längsrichtung des Zweischeibenstreuers erstreckenden Linie
sind unter einem Winkel von höchstens etwa 30° angeordnet. Auf diese Weise wird das Streubild der dem Feldrand abgewandten Verteilerscheibe beim Grenz- oder Randstreuen weiter von dem Feldrand fort verlagert und insbesondere verhindert, dass nennenswerte Anteile des Verteilgutes über den Feldrand hinaus geworfen werden.

Da es auf diese Weise allerdings nur schwerlich möglich ist, auch in der Fahrspur des Zweischeibenstreuers bzw. - sofern erwünscht - über eine gewisse Breite über die Fahrspur hinaus für eine gleichmäßige Querverteilung bis hin zu dem Feldrand zu sorgen, sieht die erfindungsgemäße Ausgestaltung andererseits vor, dass die Hauptleitflächen der Grenzstreueinrichtung jeweils wenigstens eine mit Abstand von dem dem Zweischeibenstreuer fernen Ende der jeweiligen Hauptleitfläche angeordnete Durchgangsöffnung aufweisen, welche einen auf den Öffnungsquerschnitt der Durchgangsöffnung(en) lokal begrenzten Durchtritt eines Anteils des von der Verteilerscheibe abgeworfenen Verteilgutes sicherstellt, so dass die Fahrspur oder auch - sofern erwünscht - ein Feldrandabschnitt jenseits der Fahrspur gleichfalls mit der vorgegebenen Soll-Verteilmenge an Verteilgut versorgt werden kann. Hierbei wurde überraschenderweise gefunden, dass es somit möglich ist, mittels eines am Feldrand abrupt abfallenden, äußerst steilflankigen Streubildes eine sehr gleichmäßige Querverteilung bis hin zu dem Feldrand zu erreichen, ohne dass nennenswerte Anteile an Verteilgut über den Feldrand hinaus geworfen werden. Die Durchgangsöffnungen der Hauptleitflächen der erfindungsgemäßen Grenzstreueinrichtung sind dabei wie auch die Hauptleitflächen selbst in Bezug auf die Längsachse des Zweischeibenstreuers symmetrisch angeordnet, so dass sich die Grenzstreueinrichtung in gleicher Weise für das Grenz- oder Randstreuen einer links des Zweischeibenstreuers angeordneten Feldrandes (das Dosierorgan der linken Verteilerscheibe ist in diesem Fall abgeschaltet) anbietet wie für das Grenz- oder Randstreuen einer rechts des Zweischeibenstreuers angeordneten Feldrandes (das Dosierorgan der rechten Verteilerscheibe ist in diesem Fall abgeschaltet).

Es sei an dieser Stelle darauf hingewiesen, dass sich die auf die Anordnung der Grenzstreueinrichtung oder Teile derselben beziehenden Begriffe, wie "vertikal", "horizontal", etwaige Winkelangaben und dergleichen, im Rahmen der vorliegenden Offenbarung stets auf die Betriebsposition der Grenzstreueinrichtung beziehen, in welcher sie die ihr zugedachte Funktion zu erfüllen vermag.

Um beim Rand- oder Grenzstreuen ein Überstreuen über den Feldrand hinweg mit größtmöglicher Sicherheit zu vermeiden, erstreckt sich eine jeweilige Hauptleitfläche der Grenzstreueinrichtung vorteilhafterweise bis zu je einem Punkt schräg nach außen und - in Längsrichtung des Zweischeibenstreuers betrachtet - von einer jeweiligen Verteilerscheibe fort, dessen
- gedachte horizontale Verbindungslinie mit der Drehachse der jeweiligen Verteilerscheibe mit
- einer gedachten, die jeweilige Drehachse der jeweiligen Verteilerscheibe schneidenden, horizontalen und sich in Längsrichtung des Zweischeibenstreuers erstreckenden Linie
einen Winkel von höchstens etwa 20°, vorzugsweise von höchstens etwa 15°, insbesondere von höchstens etwa 10°, höchst vorzugsweise zwischen etwa 2° und etwa 10°, wie beispielweise zwischen etwa 4° und etwa 10°, einschließt.

Um zu verhindern, dass zumindest Anteile des Verteilgutes, welches von der jeweiligen, üblicherweise mit Wurfschaufeln versehenen Verteilerscheibe in der Regel schräg nach oben und weitgehend tangential von der Verteilerscheibe abgeworfen wird, über eine jeweilige Hauptleitfläche hinweg in Richtung des Feldrandes abgeschleudert werden, schließt sich an das obere Ende einer jeweiligen Hauptleitfläche der Grenzstreueinrichtung vorteilhafterweise je eine Deckleitfläche an, welche sich unter einem Winkel zwischen etwa 90° und etwa 150°, insbesondere zwischen etwa 90° und etwa 135°, wie beispielsweise zwischen etwa 90° und etwa 120°, in Bezug auf die jeweilige Hauptleitfläche nach außen erstreckt.

Die Breite einer jeweiligen Deckleitfläche kann dabei insbesondere im Hinblick darauf, dass die Verteilgutpartikel mit zunehmendem Abstand von einer jeweiligen Verteilerscheibe in einer "Partikelwolke" von zunehmender Volumenausdehnung abgeworfen werden, von ihrem dem Zweischeibenstreuer nahen Ende in Richtung ihres dem Zweischeibenstreuer fernen Endes zunehmen.

Um für die Anordnung der Hauptleitflächen der Grenzstreueinrichtung teilweise um die Verteilerscheiben herum, also von dem zwischen den Verteilerscheiben angeordneten Punkt schräg nach außen und - in Längsrichtung des Zweischeibenstreuers betrachtet - von den Verteilerscheiben fort, zu sorgen, nimmt der zwischen den beiden Hauptleitflächen der Grenzstreueinrichtung gebildete Winkel zweckmäßigerweise von den dem Zweischeibensteuer nahen Ende in Richtung des dem Zweischeibenstreuer fernen Endes zu, was insbesondere im mehreren Stufen geschehen kann, wobei stattdessen grundsätzlich auch nach außen gebogene bzw. gekrümmte Abschnitte der Hauptleitflächen denkbar sind.

In Bezug auf die Geometrie der Hauptleitflächen der Grenzstreueinrichtung kann vorteilhafterweise vorgesehen sein, dass der zwischen den beiden Hauptleitflächen gebildete Winkel an dem dem Zweischeibenstreuer nahen Abschnitt der Hauptleitflächen kleiner etwa 15°, insbesondere kleiner etwa 10°, vorzugsweise kleiner etwa 5°, beträgt, wobei die beiden Hauptleitflächen der Grenzstreueinrichtung an ihren dem Zweischeibenstreuer nahen Abschnitten, d.h. etwa zwischen den beiden Verteilerscheiben, insbesondere im Wesentlichen parallel angeordnet sein können.

Der zwischen den beiden Hauptleitflächen der Grenzstreueinrichtung gebildete Winkel an dem dem Zweischeibenstreuer fernen Abschnitt der Hauptleitflächen kann hingegen vorteilhafterweise zwischen etwa 80° und etwa 130°, insbesondere zwischen etwa 90° und etwa 120°, vorzugsweise zwischen etwa 100° und etwa 110°, betragen.

Darüber hinaus hat es sich als vorteilhaft erwiesen, wenn sich die dem Zweischeibenstreuer fernen Abschnitte der beiden Hauptleitflächen, welche unter einem Winkel zwischen etwa 80° und etwa 130°, insbesondere zwischen etwa 90° und etwa 120°, vorzugsweise zwischen etwa 100° und etwa 110°, zueinander angeordnet sind, über wenigstens 30%, insbesondere über wenigstens 35°, vorzugsweise über wenigstens 40%, z.B. zwischen etwa 40% und etwa 50%, der Gesamtlänge einer jeweiligen Hauptleitfläche erstrecken, so dass sie merklich länger sind als die übrigen, unter demgegenüber kleineren Winkeln angeordneten Abschnitt der Hauptleitfläche der Grenzstreueinrichtung.

Die Hauptleitflächen der Grenzstreueinrichtung können ferner zwischen ihren dem Zweischeibenstreuer nahen Abschnitten und ihren dem Zweischeibenstreuer fernen Abschnitten je wenigstens einen ersten zentralen Abschnitt aufweisen, wobei die ersten zentralen Abschnitte der Hauptleitflächen unter einem Winkel zwischen etwa 10° und etwa 30°, insbesondere zwischen etwa 12° und etwa 26°, vorzugsweise zwischen etwa 14° und etwa 22°, z.B. zwischen etwa 16° und etwa 20°, zueinander angeordnet sind. Der erste zentrale Abschnitt einer jeweiligen Hauptleitfläche kann sich hierbei beispielsweise an deren dem Zweischeibenstreuer nahen Abschnitt anschließen.

Die Hauptleitflächen der Grenzstreueinrichtung können darüber hinaus zwischen ihren dem Zweischeibenstreuer nahen Abschnitten und ihren dem Zweischeibenstreuer fernen Abschnitten je wenigstens einen zweiten zentralen Abschnitt aufweisen, wobei die zweiten zentralen Abschnitte der Hauptleitflächen unter einem Winkel zwischen etwa 25° und etwa 65°, insbesondere zwischen etwa 30° und etwa 60°, vorzugsweise zwischen etwa 35° und etwa 55°, z.B. zwischen etwa 40° und etwa 50° zueinander angeordnet sind. Der zweite zentrale Abschnitt einer jeweiligen Hauptleitfläche kann sich hierbei beispielsweise an den ersten zentralen Abschnitt (an dessen dem Zweischeibenstreuer abgewandten Ende) und/oder an den dem Zweischeibenstreuer fernen Abschnitt der jeweiligen Hauptleitfläche anschließen.

Gemäß einer vorteilhaften Weiterbildung kann vorgesehen sein, dass an den einander abgewandten Seiten der beiden Hauptleitflächen der Grenzstreueinrichtung jeweils wenigstens eine, insbesondere jeweils wenigstens zwei, gegenüber der Gesamtlänge einer jeweiligen Hauptleitfläche kurze äußere Hilfsleitfläche angeordnet ist, welche sich unter einem Winkel zwischen etwa 30° und etwa 60°, insbesondere zwischen etwa 35° und etwa 55°, vorzugsweise zwischen etwa 40° und etwa 50°, in Bezug auf die jeweilige Hauptleitfläche jeweils von dem unteren Ende einer jeweiligen Hauptleitfläche schräg nach oben und außen, insbesondere im Wesentlichen in Richtung des freien Endes einer jeweiligen Deckleitfläche, erstreckt. Die äußeren Hilfsleitflächen dienen dabei zur jeweils lokalen Reflexion der Verteilgutpartikel schräg nach unten in Richtung des Bodens und sind ihrerseits symmetrisch in Bezug auf die Längsachse des Zweischeibenstreuers an den Hauptleitflächen festgelegt.

Die - in Erstreckungsrichtung der Hauptleitflächen betrachtete - Länge der äußeren Hilfsleitflächen beträgt vorzugsweise jeweils höchstens etwa 20%, insbesondere höchstens jeweils etwa 15%, vorzugsweise zwischen etwa 5% und etwa 10%, der Gesamtlänge einer jeweiligen Hauptleitfläche.

In Bezug auf die Anordnung der Hilfsleitflächen an den Hauptleitflächen der Grenzstreueinrichtung kann vorzugsweise vorgesehen sein, dass zumindest
- je eine äußere Hilfsleitfläche an dem dem Zweischeibenstreuer fernen Ende einer jeweiligen Hauptleitfläche, z.B. an oder im Bereich deren freien Endes, angeordnet ist; und/oder
- je eine äußere Hilfsleitfläche an dem dem Zweischeibenstreuer fernen Abschnitt einer jeweiligen Hauptleitfläche, welche den größten Winkel zwischen sich bilden, aber mit Abstand von dem dem Zweischeibenstreuer fernen Ende einer jeweiligen Hauptleitfläche angeordnet ist, z.B. im Wesentlichen im zentralen Bereich des dem Zweischeibenstreuer fernen Abschnittes einer jeweiligen Hauptleitfläche; und/oder
- je eine äußere Hilfsleitfläche an wenigstens einem zentralen Abschnitt einer jeweiligen Hauptleitfläche, welche unter einem Winkel zwischen etwa 10° und etwa 65°, insbesondere zwischen etwa 10° und etwa 30°, zueinander angeordnet sind, angeordnet ist.
Im letztgenannten Fall kann die jeweilige äußere Hilfsleitfläche insbesondere näher an dem dem Zweischeibenstreuer nahen Ende einer jeweiligen Hauptleitfläche als an deren dem Zweischeibenstreuer fernen Ende, also näher in Richtung der Verteilerscheiben, angeordnet sein.

Was die in den Hauptleitflächen ausgebildeten Durchgangsöffnungen der erfindungsgemäßen Grenzstreueinrichtung betrifft, so kann im Hinblick auf eine optimale Verteilung in Richtung der Fahrspur des Zweischeibenstreuers, wie sie weiter oben erläutert ist, vorteilhafterweise je eine erste Durchgangsöffnung einer jeweiligen Hauptleitfläche der Grenzstreueinrichtung an wenigstens einem zentralen Abschnitt einer jeweiligen Hauptleitfläche angeordnet sein, wobei die mit den ersten Durchgangsöffnungen versehenen zentralen Abschnitt der Grenzstreueinrichtung unter einem Winkel zwischen etwa 10° und etwa 65°, insbesondere zwischen etwa 10° und etwa 30°, zueinander angeordnet sind. Die jeweilige erste Durchgangsöffnung kann hierbei insbesondere näher an dem dem Zweischeibenstreuer nahen Ende einer jeweiligen Hauptleitfläche als an deren dem Zweischeibenstreuer fernen Ende, also näher in Richtung der Verteilerscheiben, angeordnet sein, wobei sie vorzugsweise an dem ersten zentralen Abschnitt der Hauptleitflächen bzw. höchst vorzugsweise im Bereich des dem Zweischeibenstreuer fernen Endes des ersten zentralen Abschnittes der Hauptleitflächen angeordnet sein kann, welche unter einem Winkel zwischen etwa 10° und etwa 30°, insbesondere zwischen etwa 12° und etwa 26°, vorzugsweise zwischen etwa 14° und etwa 22°, zueinander angeordnet sind.

In weiterhin vorteilhafter Ausgestaltung kann zu den vorgenannten Zwecken alternativ oder insbesondere zusätzlich vorgesehen sein, dass je eine zweite Durchgangsöffnung einer jeweiligen Hauptleitfläche der Grenzstreueinrichtung
- an wenigstens einem zentralen Abschnitt einer jeweiligen Hauptleitfläche, wobei die zentralen Abschnitte unter einem Winkel zwischen etwa 30° und etwa 60° zueinander angeordnet sind, und/oder
- an dem dem Zweischeibenstreuer fernen Abschnitt einer jeweiligen Hauptleitfläche im Bereich des dem freien Ende entgegengesetzten Endes des dem Zweischeibenstreuer fernen Abschnittes einer jeweiligen Hauptleitfläche
angeordnet ist.

Die jeweilige zweite Durchgangsöffnung kann sich hierbei insbesondere von dem an den dem Zweischeibenstreuer fernen Abschnitt einer jeweiligen Hauptleitfläche angrenzenden zentralen Abschnitt, wie dem oben beschriebenen zweiten zentralen Abschnitt einer jeweiligen Hauptleitfläche, bis in den an diesen angrenzenden Bereich des dem Zweischeibenstreuer fernen Abschnittes einer jeweiligen Hauptleitfläche erstrecken. Dabei kann sich eine jeweilige zweite Durchgangsöffnung beispielsweise unmittelbar an die erste Durchgangsöffnung einer jeweiligen Hauptleitfläche anschließen. Alternativ oder zusätzlich kann sich eine jeweilige zweite Durchgangsöffnung z.B. im Wesentlichen über den gesamten zweiten zentralen Abschnitt einer jeweiligen Hauptleitfläche, welche unter einem Winkel zwischen etwa 25° und etwa 65°, insbesondere zwischen etwa 30° und etwa 60°, vorzugsweise zwischen etwa 35° und etwa 55°, zueinander angeordnet sind, bis in den an diesen angrenzenden Bereich des dem Zweischeibenstreuer fernen Abschnittes einer jeweiligen Hauptleitfläche, welche unter einem Winkel zwischen etwa 80° und etwa 130°, insbesondere zwischen etwa 90° und etwa 120°, vorzugsweise zwischen etwa 100° und etwa 110°, zueinander angeordnet sind, erstrecken.

Um die erfindungsgemäße Grenzstreueinrichtung auf die Lage der Feldgrenze, bis zu welcher gestreut werden soll, einstellen zu können, sieht eine vorteilhafte Ausgestaltung vor, dass der Öffnungsquerschnitt und/oder die Position zumindest einer Durchgangsöffnung, insbesondere der zweiten Durchgangsöffnung, einer jeweiligen Hauptleitfläche der Grenzstreueinrichtung veränderbar ist. Durch Veränderung des Querschnittes und/oder der Position der wenigstens einen Durchgangsöffnung lässt sich somit auf der dem Feldrand zugewandten Seite des Zweischeibenstreuers entweder nur ein Teil oder die gesamte Fahrspur des Zweischeibenstreuers betreuen, oder es kann bei vollständig geöffneter Durchgangsöffnung vorzugsweises auch über die Fahrspur hinaus gestreut werden, wobei stets ein sehr steilflankiges Streubild erzeugt wird, ohne dass über die Feldgrenze hinaus geworfen wird und ohne dass der Fahrer während der Verteilarbeit stets einen exakt vorgegebenen Abstand zur Feldgrenze hin beachten muss.

Die zumindest eine Durchgangsöffnung, wie beispielsweise die zweite Durchgangsöffnung, kann vorteilhafterweise mittels eines an der jeweiligen Hauptleitfläche geführten Schiebers zumindest teilweise verschließbar sein, so dass beim Verstellen des Schiebers sowohl der Öffnungsquerschnitt als auch die Position der Durchgangsöffnung an der jeweiligen Hauptleitfläche verändert wird. Der Schieber kann hierbei insbesondere zwischen einer Öffnungsstellung, an welchem er an dem dem Zweischeibenstreuer fernen Ende der Durchgangsöffnung angeordnet ist, und einer zumindest teilweisen Schließstellung, in welcher er zumindest einen dem Zweischeibenstreuer fernen Teilquerschnitt der Durchgangsöffnung verschließt, verlagerbar sein, so dass der Schieber von dem dem Zweischeibenstreuer fernen Ende der Durchgangsöffnung (vollständige Öffnungsstellung) in Richtung des dem Zweischeibenstreuer nahen Endes der Durchgangsöffnung (teilweise oder auch vollständige Schließstellung) wirksam ist.

Dem Schieber kann dabei vorzugsweise eine verschiedene, teilweise Schließstellungen des Schiebers identifizierende Skala zugeordnet sein, welche z.B. angibt, welcher Anteil der Fahrspur des Zweischeibenstreuers bzw. welche Breite über diese hinaus bestreut wird, wenn der Schieber in die entsprechende Position verbracht worden ist.

Anlässlich von Streuversuchen hat es sich ferner als vorteilhaft erwiesen, wenn eine jeweilige Hauptleitfläche der Grenzstreueinrichtung sowohl wenigstens eine erste Durchgangsöffnung als auch wenigstens eine zweite Durchgangsöffnung aufweist, deren - in Erstreckungsrichtung einer jeweiligen Hauptleitfläche betrachteter - Abstand insbesondere höchstens 30 cm, insbesondere höchsten 20 cm, vorzugsweise höchstens 10 cm, beträgt, wobei zumindest die näher an dem dem Zweischeibenstreuer abgewandten Ende der Grenzstreueinrichtung angeordnete Durchgangsöffnung, also die zweite Durchgangsöffnung, aus den obigen Gründen vorzugsweise zumindest teilweise verschließbar sein sollte.

Um eine sehr gleichmäßige Querverteilung auch innerhalb der Fahrspur des Zweischeibenstreuers oder gegebenenfalls auch in Richtung des Feldrandes über diese hinaus zu erzielen, kann in vorteilhafter Ausgestaltung vorgesehen sein, dass zumindest einem Paar der jeweils wenigstens einen Durchgangsöffnungen einer jeweiligen Hauptleitfläche der Grenzstreueinrichtung wenigstens eine gemeinsame zentrale Hilfsleitfläche zugeordnet ist, welche an der dem Zweischeibenstreuer abgewandten Seite des jeweiligen Paares der Durchgangsöffnungen angeordnet ist und sich zwischen den Hauptleitflächen unter einem Winkel zwischen 30° und 60°, insbesondere zwischen 35° und 55°, vorzugsweise zwischen 40° und 50°, in Bezug auf eine Horizontalebene zwischen den Hauptleitflächen von einem der jeweiligen Durchgangsöffnung nahen oberen Bereich der Hauptleitflächen zu einem der jeweiligen Durchgangsöffnung fernen unteren Bereich der Hauptleitflächen erstreckt. Die Aufgabe der zentralen Hilfsleitfläche(n) besteht, insoweit ähnlich jener der äußeren Hilfsleitflächen, vornehmlich darin, die Verteilgutpartikel, welche die Durchgangsöffnung(en) passiert haben, schräg nach unten in Richtung des Bodens, aber innerhalb der Fahrspur des Zweischeibenstreuers zu reflektieren. Die zentralen Hilfsleitflächen können dabei zweckmäßigerweise unter einem gewissen Abstand von der jeweiligen Durchgangsöffnung in Richtung des dem Zweischeibenstreuer fernen Endes der Grenzstreueinrichtung versetzt angeordnet sein.

Darüber hinaus hat es sich im Hinblick auf eine sehr gleichmäßige Querverteilung auch innerhalb der Fahrspur des Zweischeibenstreuers oder gegebenenfalls auch in Richtung des Feldrandes über diese hinaus als vorteilhaft erweisen, wenn zumindest einem Paar der jeweils wenigstens einen Durchgangsöffnungen einer jeweiligen Hauptleitfläche der Grenzstreueinrichtung zwei in Richtung des dem Zweischeibenstreuer abgewandten Endes der Grenzstreueinrichtung konvergierende, vertikale Führungsleitflächen zugeordnet sind, welche zwischen den beiden Hauptleitflächen an der dem Zweischeibenstreuer abgewandten Seite des jeweiligen Paares der Durchgangsöffnungen angeordnet und z.B. an den einander zugewandten Seite der Hauptleitflächen festgelegt sind. Die zwischen den Hauptleitflächen angeordneten Führungsleitflächen schließen sich insbesondere an eine jeweilige Durchgangsöffnung in Richtung des dem Zweischeibenstreuer fernen Endes der Grenzstreueinrichtung an und leiten die die jeweilige Durchgangsöffnung passierenden Verteilgutpartikel aufgrund dessen, dass sie in Richtung des dem Zweischeibenstreuer fernen Endes der Grenzstreueinrichtung konvergieren, die Verteilgutpartikel von der jeweiligen Hauptleitfläche schräg fort in Richtung des zentralen Bereiches der Fahrspur.

In diesem Zusammenhang erweist es sich als zweckdienlich, wenn die wenigstens eine gemeinsame zentrale Hilfsleitfläche zwischen den beiden in Richtung des dem Zweischeibenstreuer abgewandten Endes der Grenzstreueinrichtung konvergierenden, vertikalen Führungsleitflächen angeordnet ist, und zwar insbesondere im Bereich der dem Zweischeibenstreuer fernen Ende der jeweiligen vertikalen Führungsleitfläche, so dass die Verteilgutpartikel mittels der Führungsleitflächen zunächst in Richtung des zentralen Bereiches der Fahrspur geleitet und sodann an der zentralen Hilfsleitfläche schräg nach unten in Richtung des Bodens reflektiert werden.

Darüber hinaus hat es sich als vorteilhaft erwiesen, wenn wenigstens einer Durchgangsöffnung, insbesondere der ersten Durchgangsöffnung, einer jeweiligen Hauptleitfläche der Grenzstreueinrichtung eine Prallfläche zugeordnet ist, welche an den einander zugewandten Seiten einer jeweiligen Hauptleitfläche angeordnet ist und sich von dem oberen Ende der Durchgangsöffnung, insbesondere unter einem Winkel zwischen 5° und 45°, vorzugsweise zwischen 10° und 35°, schräg nach innen und unten erstreckt. Die Prallfläche vermag auf diese Weise einen Teil der die Durchgangsöffnung passierenden Verteilgutpartikel lokal im Bereich dieser Durchgangsöffnung schräg nach unten in Richtung des Bodens innerhalb der Fahrspur des Zweischeibenstreuers zu reflektieren.

Die Form und Größe der Prallfläche kann dabei im Wesentlichen der Form und Größe des Querschnittes der wenigstens einen Durchgangsöffnung entsprechen, wobei die jeweilige Prallfläche beispielsweise aus der jeweiligen Hauptleitfläche ausgeschnitten und nach innen umgebogen sein kann.

Gemäß einer vorteilhafte Weiterbildung kann im Hinblick auf eine äußerst gleichmäßige Querverteilung des Verteilgutes ferner vorgesehen sein, dass zumindest einige der Leitflächen der Grenzstreueinrichtung, wie z.B. insbesondere zumindest die äußeren und/oder die zentralen Hilfsleitflächen, mit einer Mehrzahl an etwa warzenförmigen, insbesondere im Wesentlichen gleichmäßig verteilten, Erhebungen versehen sind. Die im Wesentlichen warzenförmigen Erhebungen, welche sich vorzugsweise etwa gleichmäßig über die Reflexionsfläche der jeweiligen Leitfläche erstrecken, können dabei beispielsweise eine etwa längliche bzw. ovale oder etwa tropfenförmige Gestalt besitzen und z.B. auch mit unterschiedlichen Grundflächen und/oder Höhen vorgesehen sein, um für eine sehr gleichmäßige Querverteilung zu sorgen, indem hierauf auftreffende Verteilgutpartikel in zumindest geringfügig unterschiedliche Richtungen reflektiert werden als zwischen die warzenförmige Erhebungen auftreffende Verteilgutpartikel.

Gemäß einer weiteren vorteilhaften Weiterbildung kann vorgesehen sein, dass ein jeweiliger, dem Zweischeibenstreuer abgewandter Endabschnitt einer jeweiligen Hauptleitfläche der Grenzstreueinrichtung zwischen seiner Betriebsposition und einer Transport- und Ruheposition, in welcher der Endabschnitt der jeweiligen Hauptleitfläche aus der Betriebsposition fort ausgeklappt ist, verschwenkbar ist. Auf diese Weise lässt sich der Grenzstreueinrichtung in ihrer Transport- und Ruheposition eine höhere Kompaktheit verleihen, so dass sie von dem Zweischeibenstreuer, insbesondere während des Transportes über öffentliche Straßen, nicht übermäßig vorragt und keine Gefahr für den Straßenverkehr darstellt.

Ein jeweiliger Endabschnitt einer jeweiligen Hauptleitfläche der Grenzstreueinrichtung kann dabei in seiner Ruheposition, insbesondere um eine sich parallel zu der jeweiligen Hauptleitfläche im Wesentlichen vertikal erstreckende Schwenkachse, von der jeweils entgegengesetzten Hauptleitfläche fort nach außen umgeklappt sein.

Darüber hinaus können die Endabschnitte der Hauptleitflächen der Grenzstreueinrichtung mechanisch, insbesondere elastisch, in Richtung ihrer Betriebsposition vorbelastet sein, was insbesondere mittels wenigstens einer zwischen den Endabschnitten wirksamen Feder, wie beispielsweise einer Schraubenfeder, geschehen kann. Auf diese Weise ist sichergestellt, dass die Endabschnitte einer jeweiligen Hauptleitfläche der Grenzstreueinrichtung während des Betriebs stets in ihrer vorgesehenen Betriebsposition gehalten sind, während sie entgegen ihrer mechanischen Vorbelastung in ihre Transport- und Ruheposition überführt werden können.

Schließlich erweist es sich in als solcher bekannter Weise als zweckdienlich, wenn die Grenzstreueinrichtung mit einer Hubeinrichtung ausgestattet ist, welche zur Verlagerung der Grenzstreueinrichtung zwischen ihrer Betriebsposition, in welcher sie im Wesentlichen auf dem Niveau der Verteilerscheiben angeordnet ist, und einer Transport- und Ruheposition, in welcher sie von den Verteilerscheiben fort nach oben verschwenkt ist, dient. Auf diese Weise muss die Grenzstreueinrichtung anlässlich des Grenz- oder Randstreuens nicht erst an dem Zweischeibenstreuer montiert werden, sondern kann auch während des Normalstreuens an dem Zweischeibenstreuer verbleiben und muss hierzu mittels der Hubeinrichtung lediglich aus ihrer Betriebsposition in ihre Transport- und Ruheposition verbracht werden.

Sofern ein jeweiliger Endabschnitt einer jeweiligen Hauptleitfläche in der weiter oben beschriebenen Weise zwischen seiner Betriebsposition und einer Transport- und Ruheposition, in welcher der Endabschnitt der jeweiligen Hauptleitfläche aus der Betriebsposition fort ausgeklappt ist, verschwenkbar ist, kann die Hubeinrichtung vorzugsweise ferner, insbesondere mittels je einer Hebelstange, mit einem jeweiligen, zwischen seiner Betriebsposition und seiner Transport- und Ruheposition verschwenkbaren Endabschnitt einer jeweiligen Hauptleitfläche der Grenzstreueinrichtung zusammenwirken, um bei der Verlagerung der Grenzstreueinrichtung zwischen ihrer Betriebsposition und ihrer Transport- und Ruheposition zugleich den jeweiligen Endabschnitt einer jeweiligen Hauptleitfläche zwischen ihrer Betriebsposition und ihrer Transport- und Ruheposition zu verschwenken, so dass es hierzu keines gesonderten, insbesondere manuellen, Eingriffs bedarf.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform eines Zweischeibenstreuers mit einer Grenzstreueinrichtung in deren Betriebsposition;
- Fig. 2: eine schematische Rückansicht des mit der in ihrer Betriebsposition befindlichen Grenzstreueinrichtung ausgestatteten Zweischeibenstreuers gemäß der Fig. 1;
- Fig. 3: eine im Wesentlichen der Fig. 1 entsprechende, schematische Seitenansicht des Zweischeibenstreuers mit der Grenzstreueinrichtung in deren Transport- und Ruheposition;
- Fig. 4: eine schematische Rückansicht des mit der in ihrer Transport- und Ruheposition befindlichen Grenzstreueinrichtung ausgestatteten Zweischeibenstreuers gemäß der Fig. 3;
- Fig. 5: eine schematische perspektivische Ansicht eines Ausführungsbeispiels einer Grenzstreueinrichtung von schräg oben betrachtet;
- Fig. 6: eine schematische perspektivische Ansicht der Grenzstreueinrichtung gemäß der Fig. 5 von schräg unten betrachtet;
- Fig. 7: eine schematische perspektivische Ansicht der Grenzstreueinrichtung gemäß den Fig. 5 und 6 von schräg hinten betrachtet;
- Fig. 8: eine schematische Draufsicht auf die Grenzstreueinrichtung gemäß den Fig. 5 bis 7 von oben; und
- Fig. 9: eine schematische Draufsicht auf die Grenzstreueinrichtung gemäß den Fig. 5 bis 8 von unten.

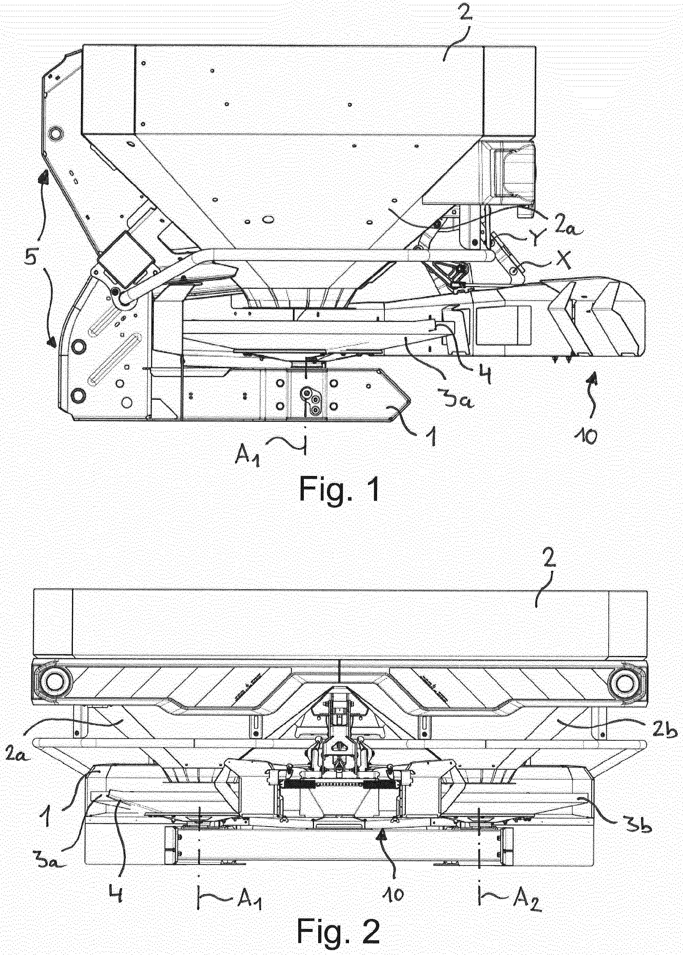

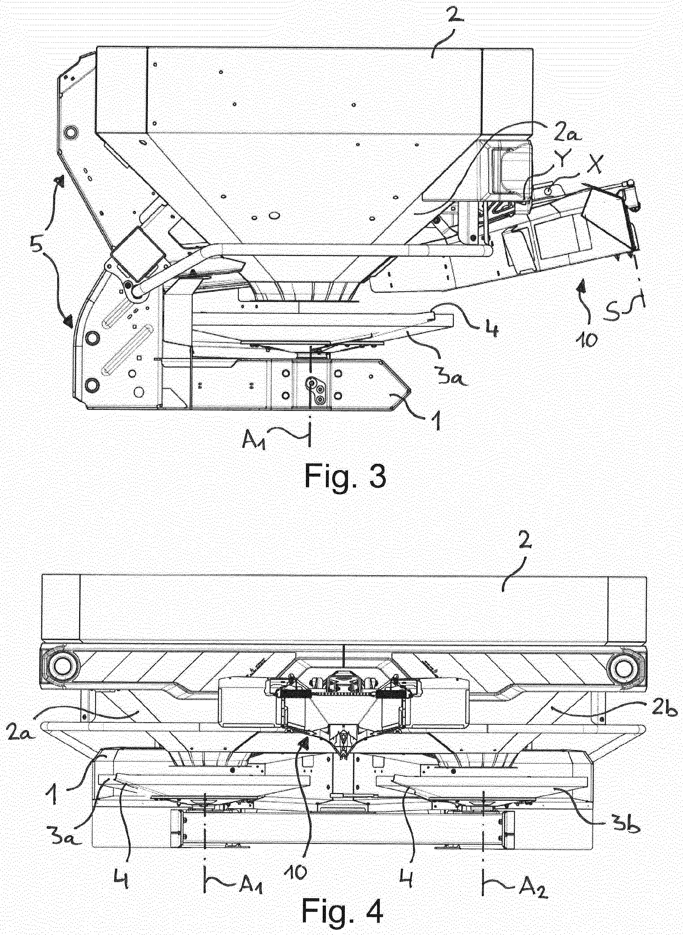

Der in den Fig. 1 bis 4 wiedergegebene Zweischeibenstreuer für landwirtschaftliche Zwecke weist einen von einem Rahmen 1 getragenen Behälter 2 auf, welcher zur Bevorratung von pulver- bzw. partikelförmigem Verteilgut, wie insbesondere Dünger oder Saatgut, dient. Der Behälter 2 umfasst im vorliegenden Fall zwei sich etwa trichterförmig nach unten verjüngende Behälterteile 2a, 2b, welche an ihrem unteren Ende jeweils eine in den Zeichnungen nicht erkennbare Auslauföffnung aufweisen. Unmittelbar unterhalb einer jeweiligen Auslauföffnung der Behälterunterteile 2a, 2b befindet sich ein in den Zeichnungen gleichfalls nicht erkennbares Dosierorgan, welches als solches aus dem Stand der Technik bekannt ist und z.B. jeweils einen mit einer jeweiligen Auslauföffnung zusammenwirkenden Dosierschieber umfasst, wobei die Dosierschieber der beiden Dosierorgane vorzugsweise unabhängig voneinander steuer- und/oder regelbar sind, um einen der jeweiligen Soll-Streumenge entsprechenden Massenstrom an Verteilgut einstellen zu können. Wiederum unterhalb eines jeweiligen Dosierorgans ist je eine Verteilerscheibe 3a, 3b um je eine etwa vertikale Achse A₁, A₂ drehbar gelagert, wobei die Verteilerscheiben 3a, 3b in üblicher Weise mit Wurfschaufeln 4 bestückt sind. Die Verteilerscheiben 3a, 3b sind mittels geeigneter Antriebe gegensinnig drehangetrieben, wobei es sich bei den Antrieben beispielsweise um, vorzugsweise unabhängig voneinander drehzahlsteuerbare, Elektro- oder Hydraulikmotoren (nicht gezeigt) handeln kann. Der Zweischeibenstreuer ist im vorliegenden Fall als Anbaugerät ausgestaltet, dessen Rahmen 1 an seiner in den Fig. 1 und 3 linken Seite eine Befestigungseinrichtung 5 umfasst, welche zur Aufnahme des Zweischeibenstreuers mittels des Dreipunkt-Krafthebers einer Zugmaschine (nicht gezeigt), wie eines Traktors, aufgenommen werden kann.

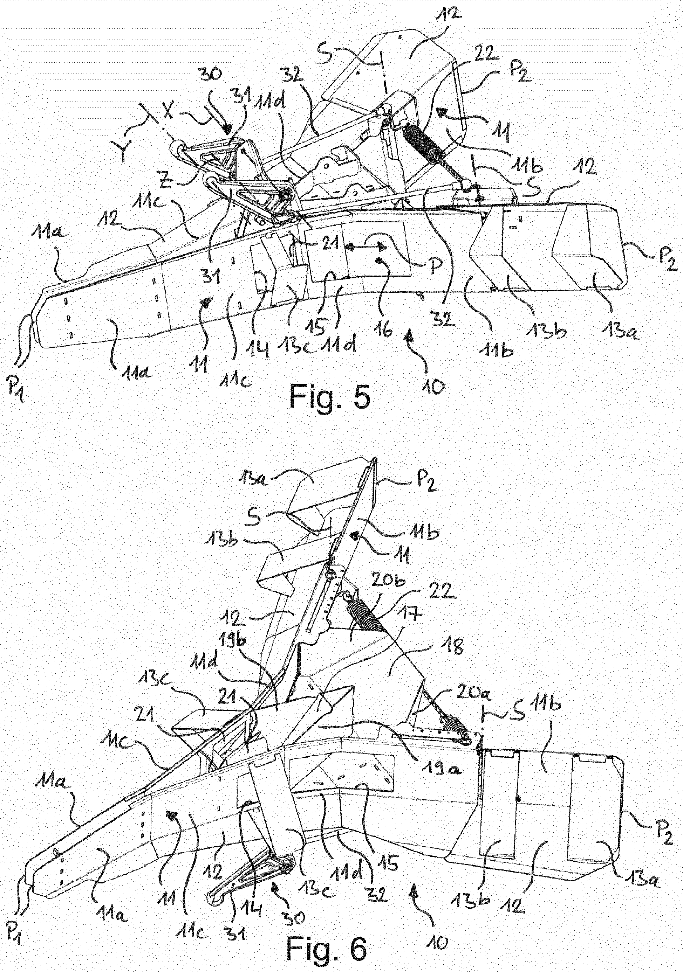

An seiner der Befestigungseinrichtung 5 entgegengesetzten Seite ist der Zweischeibenstreuer mit einer insgesamt mit dem Bezugszeichen 10 versehenen und nachstehend unter Bezugnahme auf die Fig. 5 bis 9 im Einzelnen erläuterten Grenzstreueinrichtung ausgestattet, welche sich in den Darstellungen der Fig. 1 und 2 in ihrer Betriebsposition befindet, in welcher sie mit der einem Feldrand entgegengesetzten Verteilerscheibe 3a, 3b zusammenwirkt, um das Grenz- oder Randstreuen zu gewährleisten (das Dosierorgan der dem Feldrand nahen Verteilerscheibe 3b, 3a ist in diesem Fall abgeschaltet), wohingegen sich die Grenzstreueinrichtung in den Darstellungen der Fig. 3 und 4 in ihrer Transport- und Ruhestellung befindet, in welcher sie z.B. auf einem Niveau oberhalb der Verteilerscheiben 3a, 3b angeordnet ist und nicht mit den von den Verteilerscheiben 3a, 3b abgeworfenen Verteilgutpartikeln in Kontakt tritt, um das Normalstreuen im Feldinneren zu gewährleisten.

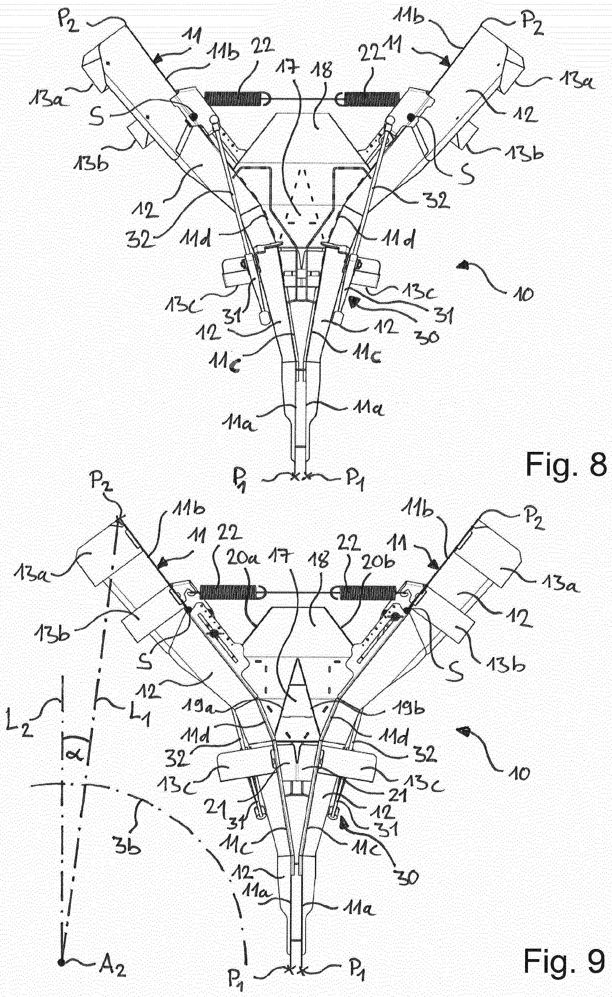

Wie insbesondere den Fig. 5 bis 9 zu entnehmen ist, weist die in den Fig. 1 und 2 in ihrer Betriebsstellung befindliche Grenzstreueinrichtung 10 zwei im Wesentlichen vertikal angeordnete Hauptleitflächen 11 auf, welche symmetrisch zur Längsachse des Zweischeibenstreuers jeweils von einem zwischen den Verteilerscheiben 3a, 3b angeordneten Punkt P₁ (hier: etwa im zentralen Bereich zwischen den Drehachsen A1, A1 der Verteilerscheiben 3a, 3b) schräg nach außen und - in Längsrichtung des Zweischeibenstreuers betrachtet - von den Verteilerscheiben 3a, 3b fort divergieren. Dabei erstreckt sich eine jeweilige Hauptleitfläche 11 der Grenzstreueinrichtung 10 bis zu je einem Punkt P₂ schräg nach außen und - in Längsrichtung des Zweischeibenstreuers betrachtet - von einer jeweiligen Verteilerscheibe 3a, 3b fort, dessen gedachte horizontale Verbindungslinie L₁ (vgl. die Fig. 9) mit der Drehachse A₂ der jeweiligen Verteilerscheibe 3b mit einer gedachten, die jeweilige Drehachse A₂ der jeweiligen Verteilerscheibe 3b schneidenden, horizontalen und sich in Längsrichtung des Zweischeibenstreuers erstreckenden Linie L₂ einen Winkel α von höchstens etwa 30° einschließt, wobei der Winkel α im vorliegenden Fall etwa 6° beträgt. Die Hauptleitflächen 11 der Grenzstreueinrichtung 10 erstrecken sich bei dem gezeigten Ausführungsbeispiel folglich um nahezu ein Viertel des Umfangs einer jeweiligen Verteilerscheibe 3a, 3b herum schräg nach außen und von dem Zweischeibenstreuer fort.

Die Hauptleitflächen 11 der Grenzstreueinrichtung 10 weisen einerseits einen dem Zweischeibenstreuer nahen Abschnitt 11a auf, welcher sich beispielsweise über etwa 20% bis 30% der Gesamtlänge einer jeweiligen Hauptleitfläche 11 erstreckt, wobei der zwischen den Abschnitten 11a der Hauptleitflächen 11 gebildete Winkel kleiner etwa 15° und im vorliegenden Fall etwa 0° beträgt, d.h. die dem Zweischeibenstreuer nahen Abschnitte 11a der Hauptleitflächen 11 sind etwa parallel zueinander angeordnet. Andererseits weisen die Hauptleitflächen 11 der Grenzstreueinrichtung 10 einen dem Zweischeibenstreuer fernen Abschnitt 11b auf, welcher sich beispielsweise über etwa 30% bis etwa 50% der Gesamtlänge einer jeweiligen Hauptleitfläche 11 erstreckt, wobei der zwischen den Abschnitten 11b der Hauptleitflächen 11 gebildete Winkel zwischen etwa 80° und etwa 130° und im vorliegenden Fall etwa 104° beträgt, d.h. die dem Zweischeibenstreuer fernen Abschnitte 11b der Hauptleitflächen 11 divergieren unter einem maximalen Winkel gegenüber den übrigen Abschnitten der Hauptleitflächen 11. Darüber hinaus besitzen die Hauptleitflächen 11 der Grenzstreueinrichtung 10 im vorliegenden Fall einen sich an deren dem Zweischeibenstreuer nahen Abschnitt 11a anschließenden ersten zentralen Abschnitt 11c, dessen Länge z.B. ähnlich jener der Abschnitte 11a oder demgegenüber etwas größer ist, wobei der zwischen den ersten zentralen Abschnitten 11c gebildete Winkel zwischen etwa 10° und etwa 30° und im vorliegenden fall etwa 18° beträgt. Schließlich besitzen die die Hauptleitflächen 11 der Grenzstreueinrichtung 10 im vorliegenden Fall einen sich an den ersten zentralen Abschnitt 11c nach außen und hinten anschließenden zweiten zentralen Abschnitt 11d, welcher sich beispielsweise über etwa 5% bis etwa 15% der Gesamtlänge einer jeweiligen Hauptleitfläche 11 erstreckt, wobei der zwischen den zweiten zentralen Abschnitten 11d gebildete Winkel zwischen etwa 25° und etwa 65° und im vorliegenden Fall etwa 45° beträgt. Der zwischen den beiden Hauptleitflächen 11 der Grenzstreueinrichtung 10 gebildete Winkel nimmt folglich von den dem Zweischeibenstreuer nahen Abschnitten 11a über die zentralen Abschnitte 11c, 11d bis zu den dem Zweischeibenstreuer fernen Abschnitten 11b sukzessive in mehreren Stufen zu.

An das obere Ende, d.h. an die obere Kante, einer jeweiligen Hauptleitfläche 11 der Grenzstreueinrichtung 10 schließt sich je eine Deckleitfläche 12 an, welche sich unter einem Winkel zwischen etwa 90° und etwa 150° und bei der zeichnerisch wiedergegebenen Ausführungsform z.B. unter einem Winkel von etwa 115° bis etwa 120° in Bezug auf die jeweilige Hauptleitfläche 11 schräg nach außen und oben erstreckt. Die Breite einer jeweiligen Deckleitfläche 12 nimmt dabei z.B. von ihrem dem Zweischeibenstreuer nahen Ende im Bereich der Abschnitte 11a der Hauptleitflächen 11 in Richtung ihres dem Zweischeibenstreuer fernen Endes im Bereich der Abschnitte 11b der Hauptleitflächen 11 zu.

An den einander abgewandten Seiten der beiden Hauptleitflächen 11 der Grenzstreueinrichtung 10 sind bei dem gezeigten Ausführungsbeispiel ferner mehrere, gegenüber der Gesamtlänge einer jeweiligen Hauptleitfläche 11 kurze äußere Hilfsleitflächen 13a, 13b, 13c angeordnet, welche sich jeweils unter einem Winkel zwischen etwa 30° und etwa 60°, z.B. unter einem Winkel von etwa 45°, in Bezug auf die Hauptleitflächen 11 erstrecken und deren - in Erstreckungsrichtung der Hauptleitflächen 11 betrachtete - Länge z.B. jeweils zwischen etwa 5° und etwa 10° der Gesamtlänge einer jeweiligen Hauptleitfläche 11 entspricht. Dabei erstrecken sich die äußeren Hilfsleitflächen 13a, 13b, 13c jeweils von dem unteren Ende einer jeweiligen Hauptleitfläche 11 schräg nach oben und außen, wobei das dem unteren Ende der jeweiligen Hauptleitfläche 11 entgegengesetzte Ende einer jeweiligen äußeren Hilfsleitfläche 13a, 13b, 13c z.B. über einen demgegenüber abgewinkelten Schenkel an einer jeweiligen Deckleitfläche 12 festgelegt ist. Dabei ist bei dem gezeigten Ausführungsbeispiel einerseits je eine äußere Hilfsleitfläche 13a an dem dem Zweischeibenstreuer fernen Ende einer jeweiligen Hauptleitfläche 11, also am freien Ende des jeweiligen, dem Zweischeibenstreuer fernen Abschnittes 11b einer jeweiligen Hauptleitfläche 11, angeordnet. Andererseits ist je eine äußere Hilfsleitfläche 13b gleichfalls an dem dem Zweischeibenstreuer fernen Abschnitt 11b einer jeweiligen Hauptleitfläche 11, aber mit Abstand von dem dem Zweischeibenstreuer fernen Ende einer jeweiligen Hauptleitfläche 11, z.B. im Mittelbereich des dem Zweischeibenstreuer fernen Abschnittes 11b, angeordnet. Darüber hinaus ist beispielsweise je eine äußere Hilfsleitfläche 13c an einem zentralen Abschnitt einer jeweiligen Hauptleitfläche 11 - hier: im Bereich des dem zweiten zentralen Abschnitt 11d zugewandten Endes des ersten zentralen Abschnittes 11c - angeordnet.

Wie des Weiteren insbesondere aus den Fig. 5 bis 9 hervorgeht, weist eine jeweilige Hauptleitfläche 11 der Grenzstreueinrichtung 10 bei dem zeichnerisch wiedergegebenen Ausführungsbeispiel je zwei wenigstens mit Abstand von dem dem Zweischeibenstreuer fernen Ende der jeweiligen Hauptleitfläche 11 angeordnete Durchgangsöffnungen 14, 15 aufweist, welche in Bezug auf die Längsachse des Zweischeibenstreuers bzw. auf jene der Grenzstreueinrichtung symmetrisch angeordnet sind. Dabei ist je eine erste Durchgangsöffnung 14 einer jeweiligen Hauptleitfläche 11 im Bereich des dem zweiten zentralen Abschnitt 11d einer jeweiligen Hauptleitfläche 11 zugewandten Endes des ersten zentralen Abschnittes 11c angeordnet, während sich je eine zweite Durchgangsöffnung 15 einer jeweiligen Hauptleitfläche 11 im Wesentlichen über deren zweiten zentralen Abschnitt 11d bis in den diesem zugewandten und an diesen angrenzenden Endbereich des dem Zweischeibenstreuer fernen Abschnittes 11b erstreckt (vgl. die Fig. 5 und 6). Die Durchgangsöffnungen 14, 15 sind z.B. in Erstreckungsrichtung einer jeweiligen Hauptleitfläche 11 nahe nebeneinander unter einem Abstand von nur etwa einem oder wenigen cm angeordnet. Der Öffnungsquerschnitt der dem Zweischeibenstreuer näheren ersten Durchgangsöffnung 14 ist im vorliegenden Fall kleiner als jener der zweiten Durchgangsöffnung 15, wobei er z.B. etwa ein Drittel bis etwa die Hälfte des Öffnungsquerschnittes der zweiten Durchgangsöffnung 15 beträgt. Um die Verteilungsbreite innerhalb der Fahrspur des Zweischeibenstreuers verändern zu können, ist sowohl der Öffnungsquerschnitt als auch die Position der zweiten Durchgangsöffnung 15 einer jeweiligen Hauptleitfläche 11 veränderbar, indem die zweite Durchgangsöffnung 15 mittels eines an der jeweiligen Hauptleitfläche 11 in Erstreckungsrichtung derselben geführten Schiebers 16 zumindest teilweise verschließbar ist, wie es durch den Pfeil P der Fig. 5 angedeutet ist. Während der Schieber 16 in der Fig. 5 in einer teilweisen Schließstellung angeordnet ist, in welcher er einen dem Zweischeibenstreuer fernen Abschnitt der zweiten Durchgangsöffnung 15 verschließt, befindet es sich in der Darstellung der Fig. 6 in seiner Öffnungsstellung, in welcher er praktisch den gesamten Öffnungsquerschnitt der zweiten Durchgangsöffnung 15 freigibt. Befindet sich der Schieber 16 in seiner Öffnungsstellung gemäß der Fig. 5, so ist er an dem dem Zweischeibenstreuer fernen Ende der Durchgangsöffnung 15 angeordnet (in der Fig. 6 rechts derselben; nicht erkennbar), während er in seiner teilweisen Schließstellung der Fig. 5 einen dem Zweischeibenstreuer fernen Teilquerschnitt der zweiten Durchgangsöffnung 15 verschließt. Dem Schieber 16 kann ferner eine verschiedene, teilweise Schließstellungen identifizierende Skala zugeordnet sein (nicht gezeigt), welche z.B. die gewünschte Verteilungsbreite innerhalb der Fahrspur oder gegebenenfalls auch in Richtung der dem Feldrand zugewandten Seite über diese hinaus anzeigt, welche mit der jeweiligen Öffnungsstellung des Schiebers 16 korrespondiert.

Einem jeweiligen Paar sowohl der ersten 14 als auch der zweiten Durchgangsöffnungen 15 einer jeweiligen Hauptleitfläche 11 der Grenzstreueinrichtung 10 ist ferner je eine gemeinsame zentrale Hilfsleitfläche 17, 18 zugeordnet, welche an der dem Zweischeibenstreuer abgewandten Seite des jeweiligen Paares der Durchgangsöffnungen 14, 15 angeordnet ist und sich zwischen den Hauptleitflächen 11 jeweils unter einem Winkel von z.B. etwa 45° in Bezug auf eine Horizontalebene zwischen den Hauptleitflächen 11 von einem der jeweiligen Durchgangsöffnung 14, 15 nahen oberen Bereich der Hauptleitflächen 11 zu einem der jeweiligen Durchgangsöffnung 14, 15 fernen unteren Bereich der Hauptleitflächen 11 erstreckt (vgl. insbesondere die Fig. 6). Der Neigungswinkel der zentralen Hilfsleitflächen 17, 18 entspricht somit etwa jenem der äußeren Hilfsleitflächen 13a, 13b, 13c und dienen auch die zentralen Hilfsleitflächen 11 zur Reflexion der Verteilgutpartikel schräg nach unten in Richtung des Bodens, aber im Bereich der Fahrspur des Zweischeibenstreuers. Darüber hinaus sind einem jeweiligen Paar sowohl der ersten 14 als auch der zweiten Durchgangsöffnungen 15 einer jeweiligen Hauptleitfläche 11 je zwei in Richtung des dem Zweischeibenstreuer abgewandten Endes der Grenzstreueinrichtung 10 konvergierende, vertikale Führungsleitflächen 19a, 19b, 20a, 20b zugeordnet, welche an der dem Zweischeibenstreuer abgewandten Seite des Paares der jeweiligen Durchgangsöffnungen 14, 15 angeordnet und an den einander zugewandten Seite der Hauptleitflächen 11 festgelegt sind. Die Führungsleitflächen 19a, 19b, 20a, 20b dienen zur Führung der Verteilgutpartikel, welche eine jeweilige Durchgangsöffnung 14, 15 passiert haben, in Richtung des Zentrums der Fahrspur des Zweischeibenstreuers, bevor sie auf die jeweilige, zwischen den beiden jeweiligen, in Richtung des dem Zweischeibenstreuer abgewandten Endes der Grenzstreueinrichtung 10 konvergierenden Führungsleitflächen 19a, 19b, 20a, 20b angeordnete zentrale Hilfsleitfläche 17, 18 auftreffen und von dort schräg nach unten in Richtung des Bodens reflektiert werden.

Insbesondere in den Fig. 5 und 6 ist ferner erkennbar, dass den ersten Durchgangsöffnungen 14 einer jeweiligen Hauptleitfläche 11 der Grenzstreueinrichtung 10 bei dem vorliegenden Ausführungsbeispiel je eine Prallfläche 21 zugeordnet ist, welche an den einander zugewandten Seiten einer jeweiligen Hauptleitfläche 11 angeordnet ist und sich von dem oberen Ende der ersten Durchgangsöffnung 14, z.B. unter einem Winkel von etwa 20°, schräg nach innen und unten erstreckt. Die Form und Größe der Prallflächen 21 entspricht z.B. im Wesentlichen der Form und Größe des Querschnittes der ersten Durchgangsöffnungen 14, wobei die jeweilige Prallfläche 21 beispielsweise aus der jeweiligen Hauptleitfläche 11 ausgeschnitten und nach innen umgebogen sein kann und zur Reflexion der die erste Durchgangsöffnung 14 passierenden Verteilgutpartikel schräg nach unten in Richtung des Bodens innerhalb der Fahrspur zu dienen vermag.

Darüber hinaus können zumindest einige der Leitflächen der Grenzstreueinrichtung 10, wie insbesondere zumindest die äußeren Hilfsleitflächen 13a, 13b, 13c und die zentralen Hilfsleitflächen 17, 18, mit einer Mehrzahl an etwa warzenförmigen, insbesondere im Wesentlichen gleichmäßig verteilten, Erhebungen versehen sein (nicht gezeigt), um die hierauf auftreffenden Verteilgutpartikel breiter zu reflektieren und auf diese Weise eine besonders gleichmäßige Querverteilung sowohl innerhalb als auch außerhalb der Fahrspur des Zweischeibenstreuers zu erreichen.

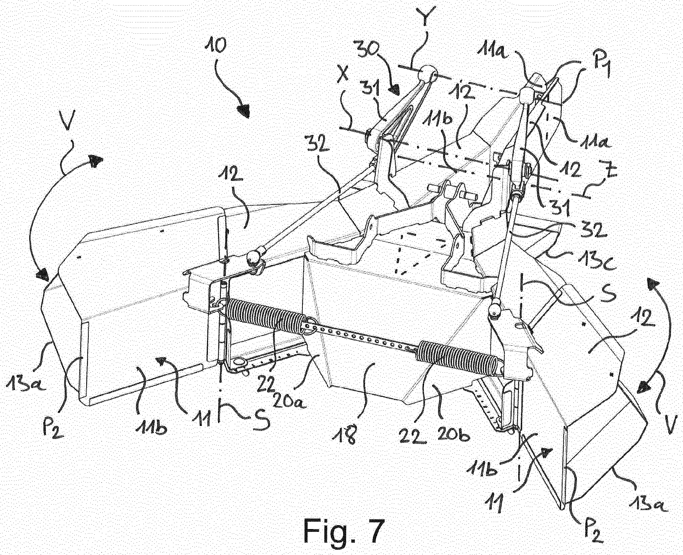

Um der Grenzstreueinrichtung 10 in einer Transport- und Ruheposition derselben (vgl. die Fig. 3 und 4) eine höhere Kompaktheit zu verleihen, so dass sie von dem Zweischeibenstreuer, z.B. während des Transportes über öffentliche Straßen, nicht übermäßig vorragt und keine Gefahr für den Straßenverkehr darstellt, sind bei dem zeichnerisch dargestellten Ausführungsbeispiel die rückwärtigen, dem Zweischeibenstreuer abgewandten Endabschnitte einer jeweiligen Hauptleitfläche 11 - oder genauer: die Endabschnitte der Abschnitte 11b - zwischen ihrer in den Fig. 1, 2 und 5 bis 9 wiedergegebenen Betriebsposition und einer in den Fig. 3 und 4 gezeigten Transport- und Ruheposition, in welcher der Endabschnitt der jeweiligen Hauptleitfläche 11 aus der Betriebsposition fort nach außen umgeklappt ist, um eine etwa vertikale Schwenkachse S verschwenkbar, wie dies in der Fig. 7 durch die Pfeile V angedeutet ist. Um die Endabschnitt der Abschnitte 11b der Hauptleitflächen 11 während des Betriebs stets in ihrer Betriebsposition zu halten, sind die Endabschnitte dabei mechanisch, im vorliegenden Fall elastisch mittels zwischen den Endabschnitten der Hauptleitflächen 11 wirksamer Schraubenfedern 22, in Richtung ihrer Betriebsposition vorbelastet.

Um die Grenzstreueinrichtung 10 zwischen ihrer in den Fig. 1 und 2 gezeigten Betriebsposition, in welcher sie im Wesentlichen auf dem Niveau der Verteilerscheiben 3a, 3b angeordnet ist, und ihrer Transport- und Ruheposition gemäß den Fig. 3 und 4, in welcher sie von den Verteilerscheiben 3a, 3b fort nach oben verschwenkt ist, hin und her verlagern zu können, ist die Grenzstreueinrichtung 10 ferner mit einer insbesondere in den Fig. 5, 7 und 8 erkennbaren Hubeinrichtung 30 ausgestattet, mittels welcher sie an der der Befestigungseinrichtung 5 entgegengesetzten Seite des Zweischeibenstreuers festgelegt ist. Wie insbesondere der Fig. 5 zu entnehmen ist, umfasst die Hubeinrichtung 30 im vorliegenden Fall zwei Dreieckshebel 31, welche an einem ihrer Ecken um eine etwa horizontale Achse X schwenkbar an der Grenzstreueinrichtung 10 angelenkt sind, während sie an einem anderen ihrer Ecken mittels einer gleichfalls etwa horizontalen Welle Y an dem Zweischeibenstreuer festgelegt sind, wobei die Welle Y - sei es manuell oder sei es motorisch - zwecks Anhebens der Grenzstreueinrichtung 10 in ihre Transport- und Ruheposition (Fig. 1 und 2) bzw. zwecks Absenkens derselben in ihre Betriebsposition (Fig. 1 und 2) hin und her drehbar ist (vgl. hierzu auch die Fig. 1 und 3). An dem anderen Eck eines jeweiligen Dreieckshebels 31 ist je ein Ende einer Hebelstange 32 um eine ebenfalls etwa horizontale Achse Z schwenkbar angelenkt, deren entgegengesetztes Ende derart an dem um die vertikale Schwenkachse S ausklappbaren Endabschnitt einer jeweiligen Hauptleitfläche 11 angelenkt ist, dass beim Anheben/Absenken der Grenzstreueinrichtung 10 zwischen ihrer Betriebs- und ihrer Transport- und Ruheposition, indem die Welle Y gedreht und die Dreieckshebel 31 dabei um ihre Achse X verschwenkt werden, die Endabschnitte einer jeweiligen Hauptleitfläche 11 mittels der Hebelstangen 32 zugleich um ihre Schwenkachse S geklappt werden, um sie ihrerseits zwischen ihrer Betriebsposition und ihrer Transport- und Ruheposition zu verschwenken.

## Patentansprüche

1. Zweischeibenstreuer mit zwei um parallele Achsen (A₁, A₂) gegensinnig drehangetriebenen Verteilerscheiben (3a, 3b) und mit einer Grenzstreueinrichtung (10), welche in ihrer Betriebsstellung zentral zwischen den Verteilerscheiben (3a, 3b) angeordnet ist und zwei im Wesentlichen vertikal angeordnete Hauptleitflächen (11) aufweist, welche symmetrisch zur Längsachse des Zweischeibenstreuers jeweils von einem zwischen den Verteilerscheiben (3a, 3b) angeordneten Punkt (P₁) schräg nach außen und - in Längsrichtung des Zweischeibenstreuers betrachtet - von den Verteilerscheiben (3a, 3b) fort divergieren, wobei
- sich eine jeweilige Hauptleitfläche (11) der Grenzstreueinrichtung (10) bis zu je einem Punkt (P₂) schräg nach außen und - in Längsrichtung des Zweischeibenstreuers betrachtet - von einer jeweiligen Verteilerscheibe (3a, 3b) fort erstreckt, dessen gedachte horizontale Verbindungslinie (L₁) mit der Drehachse (A₁, A₂) der jeweiligen Verteilerscheibe (3a, 3b) mit einer gedachten, die jeweilige Drehachse (A₁, A₂) der jeweiligen Verteilerscheibe (3a, 3b) schneidenden, horizontalen und sich in Längsrichtung des Zweischeibenstreuers erstreckenden Linie (L₂) einen Winkel (α) von höchstens 30° einschließt, und
- eine jeweilige Hauptleitfläche (11) der Grenzstreueinrichtung (10) wenigstens eine mit Abstand von dem dem Zweischeibenstreuer fernen Ende der jeweiligen Hauptleitfläche (11) angeordnete Durchgangsöffnung (14, 15) aufweist, welche in Bezug auf die Längsachse des Zweischeibenstreuers symmetrisch angeordnet sind.

2. Zweischeibenstreuer nach Anspruch 1, **dadurch gekennzeichnet, dass** sich eine jeweilige Hauptleitfläche (11) der Grenzstreueinrichtung (10) bis zu je einem Punkt (P₂) schräg nach außen und - in Längsrichtung des Zweischeibenstreuers betrachtet - von einer jeweiligen Verteilerscheibe (3a, 3b) fort erstreckt, dessen gedachte horizontale Verbindungslinie (L₁) mit der Drehachse (A₁, A₂) der jeweiligen Verteilerscheibe (3a, 3b) mit einer gedachten, die jeweilige Drehachse (A₁, A₂) der jeweiligen Verteilerscheibe (3a, 3b) schneidenden, horizontalen und sich in Längsrichtung des Zweischeibenstreuers erstreckenden Linie (L₂) einen Winkel (α) von höchstens 20°, insbesondere von höchstens 10°, vorzugsweise zwischen 2° und 10°, einschließt.

3. Zweischeibenstreuer nach Anspruch 1 oder 2, **dadurch gekennzeichnet, dass** sich an das obere Ende einer jeweiligen Hauptleitfläche (11) der Grenzstreueinrichtung (10) je eine Deckleitfläche (12) anschließt, welche sich unter einem Winkel zwischen 90° und 150°, insbesondere zwischen 90° und 135°, in Bezug auf die jeweilige Hauptleitfläche (11) nach außen erstreckt, wobei die Breite einer jeweiligen Deckleitfläche (12) insbesondere von ihrem dem Zweischeibenstreuer nahen Ende in Richtung ihres dem Zweischeibenstreuer fernen Endes zunimmt.

4. Zweischeibenstreuer nach einem der Ansprüche 1 bis 2, **dadurch gekennzeichnet, dass** der zwischen den beiden Hauptleitflächen (11) der Grenzstreueinrichtung (10) gebildete Winkel
- von den dem Zweischeibensteuer nahen Ende in Richtung des dem Zweischeibenstreuer fernen Endes, insbesondere in mehreren Stufen, zunimmt; und/oder
- an dem dem Zweischeibenstreuer nahen Abschnitt (11a) der Hauptleitflächen (11) kleiner 15°, insbesondere kleiner 10°, vorzugsweise kleiner 5°, beträgt, wobei die beiden Hauptleitflächen (11) der Grenzstreueinrichtung (10) an ihren dem Zweischeibenstreuer nahen Abschnitten (11a) insbesondere im Wesentlichen parallel angeordnet sind; und/oder
- an dem dem Zweischeibenstreuer fernen Abschnitt (11b) der Hauptleitflächen (11) zwischen 80° und 130°, insbesondere zwischen 90° und 120°, vorzugsweise zwischen 100° und 110°, beträgt, wobei sich die dem Zweischeibenstreuer fernen Abschnitte (11b) der beiden Hauptleitflächen (11) insbesondere über wenigstens 30%, insbesondere über wenigstens 35°, vorzugsweise über wenigstens 40%, der Gesamtlänge einer jeweiligen Hauptleitfläche (11) erstrecken.

5. Zweischeibenstreuer nach einem der Ansprüche 1 bis 4, **dadurch gekennzeichnet, dass** die Hauptleitflächen (11) der Grenzstreueinrichtung (10) zwischen ihren dem Zweischeibenstreuer nahen Abschnitten (11a) und ihren dem Zweischeibenstreuer fernen Abschnitten (11b)
- je wenigstens einen ersten zentralen Abschnitt (11c) aufweisen, welche unter einem Winkel zwischen 10° und 30°, insbesondere zwischen 12° und 26°, vorzugsweise zwischen 14° und 22°, zueinander angeordnet sind; und/oder
- je wenigstens einen zweiten zentralen Abschnitt (11d) aufweisen, welche unter einem Winkel zwischen 25° und 65°, insbesondere zwischen 30° und 60°, vorzugsweise zwischen 35° und 55°, zueinander angeordnet sind.

6. Zweischeibenstreuer nach einem der Ansprüche 1 bis 5, **dadurch gekennzeichnet, dass** an den einander abgewandten Seiten der beiden Hauptleitflächen (11) der Grenzstreueinrichtung (10) jeweils wenigstens eine, insbesondere jeweils wenigstens zwei, gegenüber der Gesamtlänge einer jeweiligen Hauptleitfläche (11) kurze äußere Hilfsleitfläche (13a, 13b, 13c) angeordnet ist, welche sich unter einem Winkel zwischen 30° und 60°, insbesondere zwischen 35° und 55°, vorzugsweise zwischen 40° und 50°, in Bezug auf die jeweilige Hauptleitfläche (11) jeweils von dem unteren Ende einer jeweiligen Hauptleitfläche (11) schräg nach oben und außen erstreckt, wobei insbesondere die - in Erstreckungsrichtung der Hauptleitflächen (11) betrachtete - Länge der äußeren Hilfsleitflächen (13a, 13b, 13c) jeweils höchstens 20%, insbesondere höchstens jeweils 15%, vorzugsweise zwischen 5% und 10%, der Gesamtlänge einer jeweiligen Hauptleitfläche (11) beträgt.

7. Zweischeibenstreuer nach Anspruch 6, **dadurch gekennzeichnet, dass** zumindest
- je eine äußere Hilfsleitfläche (13a) an dem dem Zweischeibenstreuer fernen Ende einer jeweiligen Hauptleitfläche (11) angeordnet ist; und/oder
- je eine äußere Hilfsleitfläche (13b) an dem dem Zweischeibenstreuer fernen Abschnitt (11b) einer jeweiligen Hauptleitfläche (11), welche den größten Winkel zwischen sich bilden, aber mit Abstand von dem dem Zweischeibenstreuer fernen Ende einer jeweiligen Hauptleitfläche (11) angeordnet ist; und/oder
- je eine äußere Hilfsleitfläche (13c) an wenigstens einem zentralen Abschnitt (11c) einer jeweiligen Hauptleitfläche (11), welche unter einem Winkel zwischen 10° und 65°, insbesondere zwischen 10° und 30°, zueinander angeordnet sind, angeordnet ist, wobei die jeweilige äußere Hilfsleitfläche (13c) insbesondere näher an dem dem Zweischeibenstreuer nahen Ende einer jeweiligen Hauptleitfläche (11) als an deren dem Zweischeibenstreuer fernen Ende angeordnet ist.

8. Zweischeibenstreuer nach einem der Ansprüche 1 bis 7, **dadurch gekennzeichnet, dass** je eine erste Durchgangsöffnung (14) einer jeweiligen Hauptleitfläche (11) der Grenzstreueinrichtung (10) an wenigstens einem zentralen Abschnitt (11c) einer jeweiligen Hauptleitfläche (11) angeordnet ist, welche unter einem Winkel zwischen 10° und 65°, insbesondere zwischen 10° und 30°, zueinander angeordnet sind, wobei die jeweilige erste Durchgangsöffnung (14) insbesondere näher an dem dem Zweischeibenstreuer nahen Ende einer jeweiligen Hauptleitfläche (11) als an deren dem Zweischeibenstreuer fernen Ende angeordnet ist.

9. Zweischeibenstreuer nach einem der Ansprüche 1 bis 8, **dadurch gekennzeichnet, dass** je eine zweite Durchgangsöffnung (15) einer jeweiligen Hauptleitfläche (11) der Grenzstreueinrichtung (10)
- an wenigstens einem zentralen Abschnitt (11d) einer jeweiligen Hauptleitfläche (11), welche unter einem Winkel zwischen 30° und 60° zueinander angeordnet sind, und/oder
- an dem dem Zweischeibenstreuer fernen Abschnitt (11b) einer jeweiligen Hauptleitfläche (11) im Bereich des dem freien Ende entgegengesetzten Endes des dem Zweischeibenstreuer fernen Abschnittes (11b) einer jeweiligen Hauptleitfläche (11) angeordnet ist,
wobei sich eine jeweilige zweite Durchgangsöffnung (15) insbesondere von dem zentralen Abschnitt (11d) einer jeweiligen Hauptleitfläche (11), welcher an den dem Zweischeibenstreuer fernen Abschnitt (11b) einer jeweiligen Hauptleitfläche (11) angrenzt, bis in den an diesen angrenzenden Bereich des dem Zweischeibenstreuer fernen Abschnittes (11b) einer jeweiligen Hauptleitfläche (11) erstreckt.

10. Zweischeibenstreuer nach einem der Ansprüche 1 bis 9, **dadurch gekennzeichnet, dass** der Öffnungsquerschnitt und/oder die Position zumindest einer Durchgangsöffnung (14, 15), insbesondere der zweiten Durchgangsöffnung (15), einer jeweiligen Hauptleitfläche (11) der Grenzstreueinrichtung (10) veränderbar ist, wobei die zumindest eine Durchgangsöffnung (15) insbesondere mittels eines an der jeweiligen Hauptleitfläche (11) geführten Schiebers (16) zumindest teilweise verschließbar ist, wobei der Schieber (16) insbesondere zwischen einer Öffnungsstellung, an welchem er an dem dem Zweischeibenstreuer fernen Ende der Durchgangsöffnung (15) angeordnet ist, und einer zumindest teilweisen Schließstellung, in welcher er zumindest einen dem Zweischeibenstreuer fernen Teilquerschnitt der Durchgangsöffnung (14, 15) verschließt, verlagerbar ist.

11. Zweischeibenstreuer nach einem der Ansprüche 1 bis 10, **dadurch gekennzeichnet, dass** eine jeweilige Hauptleitfläche (11) der Grenzstreueinrichtung (10) sowohl wenigstens eine erste Durchgangsöffnung (14) als auch wenigstens eine zweite Durchgangsöffnung (15) aufweist, deren - in Erstreckungsrichtung einer jeweiligen Hauptleitfläche (11) betrachteter - Abstand insbesondere höchstens 30 cm, insbesondere höchsten 20 cm, vorzugsweise höchstens 10 cm, beträgt.

12. Zweischeibenstreuer nach einem der Ansprüche 1 bis 11, **dadurch gekennzeichnet, dass** zumindest einem Paar der jeweils wenigstens einen Durchgangsöffnungen (14, 15) einer jeweiligen Hauptleitfläche (11) der Grenzstreueinrichtung (10)
- wenigstens eine gemeinsame zentrale Hilfsleitfläche (17, 18) zugeordnet ist, welche an der dem Zweischeibenstreuer abgewandten Seite des jeweiligen Paares der Durchgangsöffnungen (14, 15) angeordnet ist und sich zwischen den Hauptleitflächen (11) unter einem Winkel zwischen 30° und 60°, insbesondere zwischen 35° und 55°, vorzugsweise zwischen 40° und 50°, in Bezug auf eine Horizontalebene zwischen den Hauptleitflächen (11) von einem der jeweiligen Durchgangsöffnung (14, 15) nahen oberen Bereich der Hauptleitflächen (11) zu einem der jeweiligen Durchgangsöffnung (14, 15) fernen unteren Bereich der Hauptleitflächen (11) erstreckt; und/oder
- zwei in Richtung des dem Zweischeibenstreuer abgewandten Endes der Grenzstreueinrichtung (10) konvergierende, vertikale Führungsleitflächen (19a, 19b; 20a, 20b) zugeordnet sind, welche zwischen den beiden Hauptleitflächen (11) an der dem Zweischeibenstreuer abgewandten Seite des jeweiligen Paares der Durchgangsöffnungen (14, 15) angeordnet sind,
wobei die wenigstens eine gemeinsame zentrale Hilfsleitfläche (17, 18) insbesondere zwischen den beiden in Richtung des dem Zweischeibenstreuer abgewandten Endes der Grenzstreueinrichtung (10) konvergierenden, vertikalen Führungsleitflächen (19, 19b; 20a, 20b) angeordnet ist.

13. Zweischeibenstreuer nach einem der Ansprüche 1 bis 12, **dadurch gekennzeichnet, dass** wenigstens einer Durchgangsöffnung (14) einer jeweiligen Hauptleitfläche (11) der Grenzstreueinrichtung (10) eine Prallfläche (21) zugeordnet ist, welche an den einander zugewandten Seiten einer jeweiligen Hauptleitfläche (11) angeordnet ist und sich von dem oberen Ende der Durchgangsöffnung (14), insbesondere unter einem Winkel zwischen 5° und 45°, vorzugsweise zwischen 10° und 35°, schräg nach innen und unten erstreckt, wobei die Form und Größe der Prallfläche (21) insbesondere im Wesentlichen der Form und Größe des Querschnittes der wenigstens einen Durchgangsöffnung (14) entspricht, und wobei die jeweilige Prallfläche (21) insbesondere aus der jeweiligen Hauptleitfläche (11) ausgeschnitten und nach innen umgebogen ist.

14. Zweischeibenstreuer nach einem der Ansprüche 1 bis 13, **dadurch gekennzeichnet, dass** zumindest einige der Leitflächen (11, 12, 13a, 13b, 13c, 17, 18, 19a, 19b, 20a, 20b, 21) der Grenzstreueinrichtung (10) mit einer Mehrzahl an etwa warzenförmigen, insbesondere im Wesentlichen gleichmäßig verteilten, Erhebungen versehen sind.

15. Zweischeibenstreuer nach einem der Ansprüche 1 bis 14, **dadurch gekennzeichnet, dass** ein jeweiliger, dem Zweischeibenstreuer abgewandter Endabschnitt einer jeweiligen Hauptleitfläche (11) der Grenzstreueinrichtung (10) zwischen seiner Betriebsposition und einer Transport- und Ruheposition, in welcher der Endabschnitt der jeweiligen Hauptleitfläche (11) aus der Betriebsposition fort ausgeklappt ist, verschwenkbar ist, wobei ein jeweiliger Endabschnitt einer jeweiligen Hauptleitfläche (11) der Grenzstreueinrichtung (10) insbesondere
- in seiner Ruheposition, insbesondere um eine sich parallel zu der jeweiligen Hauptleitfläche (11) im Wesentlichen vertikal erstreckende Schwenkachse (S), von der jeweils entgegengesetzten Hauptleitfläche (11) fort nach außen umgeklappt ist; und/oder
- mechanisch, insbesondere elastisch, in Richtung seiner Betriebsposition vorbelastet ist, insbesondere mittels wenigstens einer zwischen den Endabschnitten wirksamen Feder (22).

16. Zweischeibenstreuer nach einem der Ansprüche 1 bis 15, **dadurch gekennzeichnet, dass** die Grenzstreueinrichtung (10) mit einer Hubeinrichtung (30) ausgestattet ist, welche zur Verlagerung der Grenzstreueinrichtung zwischen ihrer Betriebsposition, in welcher sie im Wesentlichen auf dem Niveau der Verteilerscheiben (3a, 3b) angeordnet ist, und einer Transport- und Ruheposition, in welcher sie von den Verteilerscheiben (3a, 3b) fort nach oben verschwenkt ist, dient, wobei die Hubeinrichtung (30) insbesondere ferner, insbesondere mittels je einer Hebelstange (32), mit einem jeweiligen, zwischen seiner Betriebsposition und seiner Transport- und Ruheposition verschwenkbaren Endabschnitt einer jeweiligen Hauptleitfläche (11) der Grenzstreueinrichtung (10) zusammenwirkt, um bei der Verlagerung der Grenzstreueinrichtung (10) zwischen ihrer Betriebsposition und ihrer Transport- und Ruheposition zugleich den jeweiligen Endabschnitt einer jeweiligen Hauptleitfläche (11) zwischen ihrer Betriebsposition und ihrer Transport- und Ruheposition zu verschwenken.

## Claims

1. Twin-disc spreader having two distributor discs (3a, 3b) rotationally driven in opposite directions about parallel axes (A₁, A₂) and having a border spreading device (10), which in its operating position is arranged centrally between the distributor discs (3a, 3b) and has two main guide surfaces (11), which are arranged substantially vertically and which diverge symmetrically with respect to the longitudinal axis of the twin-disc spreader obliquely outwards, respectively, from a point (P₁) arranged between the distributor discs (3a, 3b) and - viewed in the longitudinal direction of the twin-disc spreader - away from the distributor discs (3a, 3b), wherein
- a respective main guide surface (11) of the border spreading device (10) extends obliquely outwards and - viewed in the longitudinal direction of the twin-disc spreader - away from a respective distributor disc (3a, 3b) up to a point (P₂) each, the imaginary horizontal connecting line (L₁) of which with the axis of rotation (A₁, A₂) of the respective distributor disc (3a, 3b) encloses an angle (α) of at most 30° with an imaginary horizontal line (L₂) extending in the longitudinal direction of the twin-disc spreader and intersecting the respective axis of rotation (A₁, A₂) of the respective distributor disc (3a, 3b), and
- a respective main guide surface (11) of the border spreading device (10) has at least one through opening (14, 15) arranged at a distance from the end of the respective main guide surface (11) that is furthest from the twin-disc spreader, which through openings are arranged symmetrically with respect to the longitudinal axis of the twin-disc spreader.

2. Twin-disc spreader according to claim 1, **characterized in that** a respective main guide surface (11) of the border spreading device (10) extends obliquely outwards up to a point (P₂) each and - viewed in the longitudinal direction of the twin-disc spreader - away from a respective distributor disc (3a, 3b), the imaginary horizontal connecting line (L₁) of which with the axis of rotation (A₁, A₂) of the respective distributor disc (3a, 3b) encloses an angle (α) of at most 20°, in particular of at most 10°, preferably between 2° and 10°, with an imaginary horizontal line (L₂) extending in the longitudinal direction of the twin-disc spreader and intersecting the respective axis of rotation (A₁, A₂) of the respective distributor disc (3a, 3b).

3. Twin-disc spreader according to claim 1 or 2, **characterized in that** a cover guide surface (12) is attached to the upper end of a respective main guide surface (11) of the border spreading device (10), which cover guide surface (12) extends outwards with respect to the respective main guide surface (11), at an angle between 90° and 150°, in particular between 90° and 135°,wherein the width of a respective cover guide surface (12) increases in particular from its end nearest to the twin-disc spreader towards its end furthest from the twin-disc spreader.

4. Twin-disc spreader according to any of claims 1 to 2,
**characterized in that** the angle formed between the two main guide surfaces (11) of the border spreading device (10)
- increases from the end nearest to the twin-disc spreader towards the end furthest from the twin-disc spreader, in particular in multiple stages; and/or
- at the portion (11a) nearest to the twin-disc spreader of the main guide surfaces (11), is less than 15°, in particular less than 10°, preferably less than 5°, wherein the two main guide surfaces (11) of the border spreading device (10) are arranged in particular in a substantially parallel manner at their portions (11a) nearest to the twin-disc spreader; and/or
- at the portion (11b) furthest from the twin-disc spreader of the main guide surfaces (11), is between 80° and 130°, in particular between 90° and 120°, preferably between 100° and 110°, wherein the portions (11b) away from the twin-disc spreader of the two main guide surfaces (11) extend in particular over at least 30%, in particular over at least 35°, preferably over at least 40%, of the total length of a respective main guide surface (11).

5. Twin-disc spreader according to any of claims 1 to 4,
**characterized in that** the main guide surfaces (11) of the border spreading device (10) between their portions (11a) near the twin-disc spreader and their portions (11b) away from the twin-disc spreader
- each have at least one first central portion (11c) which are arranged at an angle to each other between 10° and 30°, in particular between 12° and 26°, preferably between 14° and 22°;
and/or
- each have at least one second central portion (11d) which are arranged at an angle to each other between 25° and 65°, in particular between 30° and 60°, preferably between 35° and 55°.

6. Twin-disc spreader according to any of claims 1 to 5, **characterized in that** on the sides facing away from each other of the two main guide surfaces (11) of the border spreading device (10), respectively at least one, in particular respectively at least two, short outer auxiliary guide surface (13a, 13b, 13c) is arranged opposite the total length of a respective main guide surface (11), which auxiliary guide surface (13a, 13b, 13c) extends obliquely upwards and outwards from the lower end of a respective main guide surface (11) at an angle between 30° and 60°, in particular between 35° and 55°, preferably between 40° and 50°, with respect to the respective main guide surface (11), in particular the length of the outer auxiliary guide surfaces (13a, 13b, 13c) - viewed in the direction of extension of the main guide surfaces (11) - respectively being at most 20%, in particular at most 15%, preferably between 5% and 10%, of the total length of a respective main guide surface (11).

7. Twin-disc spreader according to claim 6, **characterized in that** at least
- one outer auxiliary guide surface (13a) eachare arranged at the end of a respective main guide surface (11) that is away from the twin-disc spreader; and/or
- one outer auxiliary guide surface (13b) eachare arranged on the portion that is away from the twin-disc spreader (11b) of a respective main guide surface (11), which form the largest angle between them, but at a distance from the end of a respective main guide surface (11) that is away from the twin-disc spreader; and/or
- one outer auxiliary guide surface (13c) each is arranged on at least one central portion (11c) of a respective main guide surface (11), which are arranged at an angle to each other between 10° and 65°, in particular between 10° and 30°, wherein in particular the respective outer auxiliary guide surface (13c) is arranged nearer to the end of a respective main guide surface (11) that is near to the twin-disc spreader than to its end that is away from the twin-disc spreader.

8. Twin-disc spreader according to any of claims 1 to 7,
**characterized in that** a respective first through opening (14) of a respective main guide surface (11) of the border spreading device (10) is arranged on at least one central portion (11c) of a respective main guide surface (11), which are arranged at an angle to each other between 10° and 65°, in particular between 10° and 30°, the respective first through opening (14) being arranged in particular nearer the end of a respective main guide surface (11) that is nearto the twin-disc spreader than its end that is away from the twin-disc spreader.

9. Twin-disc spreader according to any of claims 1 to 8,
**characterized in that** a second through opening (15) of a respective main guide surface (11) of the border spreading device (10) is arranged
- on at least one central portion (11d) of a respective main guide surface (11), which are arranged at an angle to each other between 30° and 60°, and/or
- on the portion (11b) of a respective main guide surface (11) that is away from the twin-disc spreader in the region of the end which is opposite to the free end of the portion (11b) of a respective main guide surface (11) that is away from the twin-disc spreader,
wherein a respective second through opening (15) extends, in particular from the central portion (11d) of a respective main guide surface (11), which is adjacent to the portion (11b) of a respective main guide surface (11) that is away from the twin-disc spreader, to the region adjacent to this region of the portion (11b) of a respective main guide surface (11) that is away from the twin-disc spreader.

10. Twin-disc spreader according to any of claims 1 to 9, **characterized in that** the opening cross-section and/or the position of at least one through opening (14, 15), in particular of the second through opening (15), of a respective main guide surface (11) of the border spreading device (10) is changeable, wherein theat least one through opening (15) is at least partially closable, in particular by means of a slide (16) guided on the respective main guide surface (11), wherein the slide (16) is displaceable, in particular between an open position in which the slide is arranged at the end away from the twin-disc spreader of the through opening (15) , and an at least partially closed position in which the slide closes at least apartial cross-section away from the twin-disc spreader of the through opening (14, 15)..

11. Twin-disc spreader according to any of claims 1 to 10,
**characterized in that** a respective main guide surface (11) of the border spreading device (10) has at least one first through opening (14) as well as at least one second through opening (15), whose distance - viewed in the direction of extension of a respective main guide surface (11) - is in particular at most 30 cm, in particular at most 20 cm, preferably at most 10 cm.

12. Twin-disc spreader according to any of claims 1 to 11,
**characterized in that** at least one pair of the at least one through openings (14, 15), respectively, of a respective main guide surface (11) of the border spreading device (10)
- is assigned to at least one common central auxiliary guide surface (17, 18), which is arranged on the side facing away from the twin-disc spreader of the respective pair of through openings (14, 15) and extends between the main guide surfaces (11) at an angle between 30° and 60°, in particular between 35° and 55°, preferably between 40° and 50°, with respect to a horizontal plane between the main guide surfaces (11) from an upper region of the main guide surfaces (11) that is near the respective through opening (14, 15) to a lower region of the main guide surfaces (11) that is away from the respective through opening (14, 15); and/or
- is assigned to two vertical lead guide surfaces (19a, 19b; 20a, 20b) converging towards the end of the border spreading device (10) facing away from the twin-disc spreader, which lead guide surfaces are arranged between the two main guide surfaces (11) on the side of the respective pair of through openings (14, 15) facing away from the twin-disc spreader,
wherein the at least one common central auxiliary guide surface (17, 18) is arranged in particular between the two vertical lead guide surfaces (19, 19b; 20a, 20b) converging towards the end of the border spreading device (10) facing away from the twin-disc spreader.

13. Twin-disc spreader according to any of claims 1 to 12, **characterized in that** a baffle (21) is assigned to at least one through opening (14) of a respective main guide surface (11) of the border spreading device (10), which baffle is arranged on the mutually facing sides of a respective main guide surface (11) and extends obliquely inwards and downwards from the upper end of the through opening (14), in particular at an angle between 5° and 45°, preferably between 10° and 35°, wherein the shape and size of the baffle (21) corresponding in particular substantially to the shape and size of the cross-section of the at least one through opening (14), and wherein the respective baffle (21) is in particular cut out of the respective main guide surface (11) and bent inwards.

14. Twin-disc spreader according to any of claims 1 to 13, **characterized in that** at least some of the guide surfaces (11, 12, 13a, 13b, 13c, 17, 18, 19a, 19b, 20a, 20b, 21) of the border spreading device (10) are provided with multiple approximately nodular, in particular substantially uniformly distributed, elevations.

15. Twin-disc spreader according to any of claims 1 to 14,
**characterized in that** a respective end portion of a respective main guide surface (11) of the border spreading device (10), facing away from the twin-disc spreader, is pivotable between its operating position and a transport and rest position in which the end portion of the respective main guide surface (11) is folded out from the operating position, wherein a respective end portion of a respective main guide surface (11) of the border spreading device (10) in particular
- in its rest position, in particular about a pivot axis (S) that extends substantially vertically and parallel to the respective main guide surface (11), being folded outwards away from the respective opposite main guide surface (11);
and/or
- being mechanically, in particular elastically, preloaded in the direction of its operating position, in particular by means of at least one spring (22) acting between the end portions.

16. Twin-disc spreader according to any of claims 1 to 15,
**characterized in that** the border spreading device (10) is equipped with a lifting device (30) which serves to relocate the border spreading device between its operating position, in which it is substantially arranged at the level of the distributor discs (3a, 3b), and a transport and rest position, in which it is pivoted upwards away from the distributor discs (3a, 3b), wherein the lifting device (30) in particular further, in particular by means of a lever rod (32), interacting with a respective end portion of a respective main guide surface (11) of the border spreading device (10) that is pivotable between its operating position and its transport and rest position, in order to pivot the respective end portion of a respective main guide surface (11) between its operating position and its transport and rest position while relocating the border spreading device (10) between its operating position and its transport and rest position.

## Revendications

1. Épandeur à deux disques comportant deux disques de distribution (3a, 3b) entraînés en rotation en sens inverse autour d'axes (A₁, A₂) parallèles et un dispositif d'épandage en bordure (10) qui, dans sa position de fonctionnement, est disposé au centre entre les disques de distribution (3a, 3b) et présente deux surfaces de guidage principales (11) disposées sensiblement verticalement, lesquelles divergent, symétriquement par rapport à l'axe longitudinal de l'épandeur à deux disques, respectivement à partir d'un point (P₁) disposé entre les disques de distribution (3a, 3b), en biais vers l'extérieur et, vues dans la direction longitudinale de l'épandeur à deux disques, à partir des disques de distribution (3a, 3b), dans lequel
- une surface de guidage principale (11) respective du dispositif d'épandage en bordure (10) s'étend en biais vers l'extérieur respectivement jusqu'un point (P₂) et, vue dans la direction longitudinale de l'épandeur à deux disques, à partir d'un disque de distribution (3a, 3b) respectif, dont la ligne de jonction horizontale imaginaire (L₁) avec l'axe de rotation (A₁, A₂) du disque de distribution (3a, 3b) respectif forme un angle (α) d'au plus 30° avec une ligne imaginaire horizontale (L₂) coupant l'axe de rotation (A₁, A₂) respectif du disque de distribution (3a, 3b) respectif et s'étendant dans la direction longitudinale de l'épandeur à deux disques, et
- une surface de guidage principale (11) respective du dispositif d'épandage en bordure (10) présente au moins une ouverture de passage (14, 15) disposée à distance de l'extrémité de la surface de guidage principale (11) respective éloignée de l'épandeur à deux disques, lesquelles ouvertures sont disposées symétriquement par rapport à l'axe longitudinal de l'épandeur à deux disques.

2. Épandeur à deux disques selon la revendication 1,
**caractérisé en ce qu'**une surface de guidage principale (11) respective du dispositif d'épandage en bordure (10) s'étend en biais vers l'extérieur respectivement jusqu'un point (P₂) et, vue dans la direction longitudinale de l'épandeur à deux disques, à partir d'un disque de distribution (3a, 3b) respectif, dont la ligne de jonction horizontale imaginaire (L₁) avec l'axe de rotation (A₁, A₂) du disque de distribution (3a, 3b) respectif forme un angle (α) d'au plus 20°, en particulier d'au plus 10°, de préférence entre 2° et 10°, avec une ligne imaginaire horizontale (L₂) coupant l'axe de rotation (A₁, A₂) respectif du disque de distribution (3a, 3b) respectif et s'étendant dans la direction longitudinale de l'épandeur à deux disques.

3. Épandeur à deux disques selon la revendication 1 ou 2,
**caractérisé en ce que** l'extrémité supérieure d'une surface de guidage principale (11) respective du dispositif d'épandage en bordure (10) est suivie respectivement d'une surface de guidage de recouvrement (12) qui s'étend vers l'extérieur selon un angle situé entre 90° et 150°, en particulier entre 90° et 135°, par rapport à la surface de guidage principale (11) respective, dans lequel la largeur d'une surface de guidage de recouvrement (12) respective augmente en particulier à partir de son extrémité proche de l'épandeur à deux disques en direction de son extrémité éloignée de l'épandeur à deux disques.

4. Épandeur à deux disques selon l'une des revendications 1 à 2,
**caractérisé en ce que** l'angle formé entre les deux surfaces de guidage principales (11) du dispositif d'épandage en bordure (10)
- augmente à partir de l'extrémité proche de l'épandeur à deux disques en direction de l'extrémité éloignée de l'épandeur à deux disques, en particulier en plusieurs étapes ; et/ou
- au niveau de la section (11a) des surfaces de guidage principales (11) proche de l'épandeur à deux disques, est inférieur à 15°, en particulier inférieur à 10°, de préférence inférieur à 5°, dans lequel les deux surfaces de guidage principales (11) du dispositif d'épandage en bordure (10) sont disposées, en particulier de manière sensiblement parallèle, au niveau de leurs sections (11a) proches de l'épandeur à deux disques ; et/ou
- au niveau de la section (11b) des surfaces de guidage principales (11) éloignée de l'épandeur à deux disques, est situé entre 80° et 130°, en particulier entre 90° et 120°, de préférence entre 100° et 110°, dans lequel les sections (11b) des deux surfaces de guidage principales (11) éloignées de l'épandeur à deux disques s'étendent en particulier sur au moins 30 %, en particulier sur au moins 35°, de préférence sur au moins 40 %, de la longueur totale d'une surface de guidage principale (11) respective.

5. Épandeur à deux disques selon l'une des revendications 1 à 4,
**caractérisé en ce que** les surfaces de guidage principales (11) du dispositif d'épandage en bordure (10) présentent, entre leurs sections (11a) proches de l'épandeur à deux disques et leurs sections (11b) éloignées de l'épandeur à deux disques,
- respectivement au moins une première section centrale (11c), lesquelles premières sections centrales sont disposées les unes par rapport aux autres selon un angle situé entre 10° et 30°, en particulier entre 12° et 26°, de préférence entre 14° et 22° ;
et/ou
- respectivement au moins une seconde section centrale (11d), lesquelles secondes sections centrales sont disposées les unes par rapport aux autres selon un angle situé entre 25° et 65°, en particulier entre 30° et 60°, de préférence entre 35° et 55°.

6. Épandeur à deux disques selon l'une des revendications 1 à 5,
**caractérisé en ce qu'**au niveau des côtés opposés l'un à l'autre des deux surfaces de guidage principales (11) du dispositif d'épandage en bordure (10), sont disposées respectivement au moins une, en particulier respectivement au moins deux, surfaces de guidage auxiliaires externes (13a, 13b, 13c) courtes par rapport à la longueur totale d'une surface de guidage principale (11) respective, lesquelles s'étendent selon un angle situé entre 30° et 60°, en particulier entre 35° et 55°, de préférence entre 40° et 50°, par rapport à la surface de guidage principale (11) respective, respectivement en biais vers le haut et vers l'extérieur à partir de l'extrémité inférieure d'une surface de guidage principale (11) respective, dans lequel la longueur des surfaces de guidage auxiliaires externes (13a, 13b, 13c), vue dans la direction d'extension des surfaces de guidage principales (11), représentent, respectivement au plus 20 %, en particulier au plus respectivement 15 %, de préférence entre 5 % et 10 %, de la longueur totale d'une surface de guidage principale (11) respective.

7. Épandeur à deux disques selon la revendication 6,
**caractérisé en ce qu'**au moins
- respectivement une surface de guidage auxiliaire externe (13a) est disposée au niveau de l'extrémité d'une surface de guidage principale (11) respective éloignée de l'épandeur à deux disques ; et/ou
- respectivement une surface de guidage auxiliaire externe (13b) est disposée au niveau de la section (11b) d'une surface de guidage principale (11) respective éloignée de l'épandeur à deux disques, lesquelles surfaces forment entre elles l'angle le plus grand, mais à distance de l'extrémité d'une surface de guidage principale (11) respective éloignée de l'épandeur à deux disques ; et/ou
- respectivement une surface de guidage auxiliaire externe (13c) est disposée au niveau d'au moins une section centrale (11c) d'une surface de guidage principale (11) respective, lesquelles surfaces sont disposées l'une par rapport à l'autre selon un angle situé entre 10° et 65°, en particulier entre 10° et 30°, dans lequel la surface de guidage auxiliaire externe (13c) respective est en particulier disposée plus près de l'extrémité d'une surface de guidage principale (11) respective proche de l'épandeur à deux disques que de son extrémité éloignée de l'épandeur à deux disques.

8. Épandeur à deux disques selon l'une des revendications 1 à 7,
**caractérisé en ce que** respectivement une première ouverture de passage (14) d'une surface de guidage principale (11) respective du dispositif d'épandage en bordure (10) est disposée au niveau d'au moins une section centrale (11c) d'une surface de guidage principale (11) respective, lesquelles surfaces sont disposées l'une par rapport à l'autre selon un angle situé entre 10° et 65°, en particulier entre 10° et 30°, dans lequel la première ouverture de passage (14) respective est en particulier disposée plus près de l'extrémité d'une surface de guidage principale (11) respective proche de l'épandeur à deux disques que de son extrémité éloignée de l'épandeur à deux disques.

9. Épandeur à deux disques selon l'une des revendications 1 à 8,
**caractérisé en ce que** respectivement une seconde ouverture de passage (15) d'une surface de guidage principale (11) respective du dispositif d'épandage en bordure (10)
- est disposée au niveau d'au moins une section centrale (11d) d'une surface de guidage principale (11) respective, lesquelles surfaces sont disposées l'une par rapport à l'autre selon un angle situé entre 30° et 60°, et/ou
- est disposée au niveau de la section (11b) d'une surface de guidage principale (11) respective éloignée de l'épandeur à deux disques, dans la zone de l'extrémité opposée à l'extrémité libre de la section (11b) d'une surface de guidage principale (11) éloignée de l'épandeur à deux disques,
dans lequel une seconde ouverture de passage (15) respective s'étend en particulier à partir de la section centrale (11d) d'une surface de guidage principale (11) respective, laquelle est adjacente à la section (11b) d'une surface de guidage principale (11) respective éloignée de l'épandeur à deux disques, jusque dans la zone adjacente à celle-ci de la section (11b) d'une surface de guidage principale (11) respective éloignée de l'épandeur à deux disques.

10. Épandeur à deux disques selon l'une des revendications 1 à 9,
**caractérisé en ce que** la section transversale d'ouverture et/ou la position d'au moins une ouverture de passage (14, 15), en particulier de la seconde ouverture de passage (15), d'une surface de guidage principale (11) respective du dispositif d'épandage en bordure (10) sont modifiables, dans lequel l'au moins une ouverture de passage (15) peut être au moins partiellement fermée en particulier au moyen d'une glissière (16) guidée au niveau de la surface de guidage principale (11) respective, dans lequel la glissière (16) peut en particulier être déplacée entre une position d'ouverture, dans laquelle elle est disposée au niveau de l'extrémité de l'ouverture de passage (15) éloignée de l'épandeur à deux disques, et une position de fermeture au moins partielle, dans laquelle elle ferme au moins une section transversale partielle de l'ouverture de passage (14, 15) éloignée de l'épandeur à deux disques.

11. Épandeur à deux disques selon l'une des revendications 1 à 10,
**caractérisé en ce qu'**une surface de guidage principale (11) respective du dispositif d'épandage en bordure (10) présente à la fois au moins une première ouverture de passage (14) et au moins une seconde ouverture de passage (15), dont la distance, vue dans la direction d'extension d'une surface de guidage principale (11) respective, représente en particulier au plus 30 cm, en particulier au plus 20 cm, de préférence au plus 10 cm.

12. Épandeur à deux disques selon l'une des revendications 1 à 11,
**caractérisé en ce qu'**à au moins une paire des respectivement au moins une ouvertures de passage (14, 15) d'une surface de guidage principale (11) respective du dispositif d'épandage en bordure (10)
- est associée au moins une surface de guidage auxiliaire centrale commune (17, 18), laquelle est disposée au niveau du côté de la paire respective d'ouvertures de passage (14, 15) opposé à l'épandeur à deux disques et s'étend entre les surfaces de guidage principales (11) selon un angle situé entre 30° et 60°, en particulier entre 35° et 55°, de préférence entre 40° et 50°, par rapport à un plan horizontal situé entre les surfaces de guidage principales (11), à partir d'une zone supérieure des surfaces de guidage principales (11) proche de l'une des ouvertures de passage (14, 15) respectives jusqu'une zone inférieure des surfaces de guidage principales (11) éloignée de l'ouverture de passage (14, 15) respective ; et/ou
- sont associées deux surfaces de guidage verticales (19a, 19b ; 20a, 20b) convergeant en direction de l'extrémité du dispositif d'épandage en bordure (10) opposée à l'épandeur à deux disques, lesquelles sont disposées entre les deux surfaces de guidage principales (11) au niveau du côté de la paire respective d'ouvertures de passage (14, 15) opposé à l'épandeur à deux disques, dans lequel l'au moins une surface de guidage auxiliaire centrale commune (17, 18) est en particulier disposée entre les deux surfaces de guidage verticales (19, 19b ; 20a, 20b) convergeant en direction de l'extrémité du dispositif d'épandage en bordure (10) opposée à l'épandeur à deux disques.

13. Épandeur à deux disques selon l'une des revendications 1 à 12,
**caractérisé en ce qu'**à au moins une ouverture de passage (14) d'une surface de guidage principale (11) respective du dispositif d'épandage en bordure (10) est associé un déflecteur (21), lequel est disposé au niveau des côtés orientés l'un vers l'autre d'une surface de guidage principale (11) respective et s'étend à partir de l'extrémité supérieure de l'ouverture de passage (14), en particulier selon un angle situé entre 5° et 45°, de préférence entre 10° et 35°, en biais vers l'intérieur et vers le bas, dans lequel la forme et la dimension du déflecteur (21) correspond en particulier sensiblement à la forme et à la dimension de la section transversale de l'au moins une ouverture de passage (14), et dans lequel le déflecteur (21) respectif est en particulier découpé dans la surface de guidage principale (11) respective et replié vers l'intérieur.

14. Épandeur à deux disques selon l'une des revendications 1 à 13,
**caractérisé en ce qu'**au moins certaines des surfaces de guidage (11, 12, 13a, 13b, 13c, 17, 18, 19a, 19b, 20a, 20b, 21) du dispositif d'épandage en bordure (10) sont pourvues d'une pluralité d'élévations de forme approximativement en verrue, en particulier réparties de manière sensiblement uniforme.

15. Épandeur à deux disques selon l'une des revendications 1 à 14,
**caractérisé en ce qu'**une section d'extrémité respective, opposée à l'épandeur à deux disques, d'une surface de guidage principale (11) respective du dispositif d'épandage en bordure (10) peut pivoter entre sa position de fonctionnement et une position de transport et de repos, dans laquelle la section d'extrémité de la surface de guidage principale (11) respective est déployée hors de la position de fonctionnement, dans lequel une section d'extrémité respective d'une surface de guidage principale (11) respective du dispositif d'épandage en bordure (10) est en particulier,
- dans sa position de repos, rabattue vers l'extérieur, en particulier autour d'un axe de pivotement (S) s'étendant sensiblement verticalement et parallèlement par rapport à la surface de guidage principale (11) respective, à partir de la surface de guidage principale (11) opposée respective ; et/ou
- précontrainte mécaniquement, en particulier de manière élastique, en direction de sa position de fonctionnement, en particulier au moyen d'au moins un ressort (22) agissant entre les sections d'extrémité.

16. Épandeur à deux disques selon l'une des revendications 1 à 15,
**caractérisé en ce que** le dispositif d'épandage en bordure (10) est équipé d'un dispositif de levage (30) destiné à déplacer le dispositif d'épandage en bordure entre sa position de fonctionnement, dans laquelle il est disposé sensiblement au niveau des disques de distribution (3a, 3b), et une position de transport et de repos, dans laquelle il est pivoté vers le haut à partir des disques de distribution (3a, 3b), dans lequel le dispositif de levage (30) coopère en outre, en particulier au moyen d'une tige de levier (32) respective, en particulier avec une section d'extrémité respective, pouvant pivoter entre sa position de fonctionnement et sa position de transport et de repos, d'une surface de guidage principale (11) respective du dispositif d'épandage en bordure (10), afin, lors du déplacement du dispositif d'épandage en bordure (10) entre sa position de fonctionnement et sa position de transport et de repos, de faire pivoter simultanément la section d'extrémité respective d'une surface de guidage principale (11) respective entre sa position de fonctionnement et sa position de transport et de repos.
